(19) **Europäisches Patentamt**
**European Patent Office**
**Office européen des brevets**

(11) **EP 4 572 464 A1**

(12) **EUROPEAN PATENT APPLICATION**
published in accordance with Art. 153(4) EPC

(43) Date of publication:
**18.06.2025 Bulletin 2025/25**

(21) Application number: **23852025.8**

(22) Date of filing: **14.08.2023**

(51) International Patent Classification (IPC):
***H04W 72/04*** (2023.01)

(52) Cooperative Patent Classification (CPC):
**H04W 72/04**

(86) International application number:
**PCT/CN2023/112873**

(87) International publication number:
**WO 2024/032806 (15.02.2024 Gazette 2024/07)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **12.08.2022 CN 202210970208**

(71) Applicant: **Beijing Unisoc Communications
Technology
Co., Ltd
Beijing 100083 (CN)**

(72) Inventor: **ZHOU, Huan
Beijing 100083 (CN)**

(74) Representative: **Mewburn Ellis LLP
Aurora Building
Counterslip
Bristol BS1 6BX (GB)**

(54) **DATA TRANSMISSION METHOD, APPARATUS, CHIP, CHIP MODULE AND STORAGE MEDIUM**

(57) A data transmission method and apparatus, a chip, a chip module, and a storage medium are provided. The method includes the following. A terminal device determines $M$ resources from a frequency-domain resource set, and performs data transmission with a network device on the $M$ resources, where the $M$ resources are $M$ resource block (RB) sets or $M$ RBs, the frequency-domain resource set includes at least one segment of frequency-domain resources, the at least one segment of frequency-domain resources includes at least one segment of uplink frequency-domain resources and/or at least one segment of downlink frequency-domain resources, and $M$ is an integer and $M > 0$. With the solution of the disclosure, by determining a resource(s) in frequency domain in a sub-band full duplex (SBFD) scenario and performing data transmission on the resource(s), it is possible to realize data transmission in the SBFD scenario.

```
┌─────────────┐                    ┌─────────────┐
│  TERMINAL   │                    │   NETWORK   │
│   DEVICE    │                    │   DEVICE    │
└──────┬──────┘                    └──────┬──────┘
       │                                  │
┌──────┴──────────┐              ┌─────────┴───────┐
│ S501, DETERMINE M│             │ S502, DETERMINE M│
│  RESOURCES FROM  │             │  RESOURCES FROM  │
│ FREQUENCY-DOMAIN │             │ FREQUENCY-DOMAIN │
│  RESOURCE SET    │             │  RESOURCE SET    │
└──────┬──────────┘              └─────────┬───────┘
       │                                  │
       │   S503, DATA (TRANSMITTED ON M   │
       │◄──────────RESOURCES)────────────►│
       │                                  │
```

FIG. 5

**Description**

CROSS-REFERENCE TO RELATED APPLICATION(S)

This application claims priority to Chinese patent application No. 202210970208.0, filed to China National Intellectual Property Administration (CNIPA) on August 12, 2022 and entitled "DATA TRANSMISSION METHOD AND APPARATUS, CHIP, CHIP MODULE, AND STORAGE MEDIUM", which is incorporated herein by reference in its entirety.

TECHNICAL FIELD

The disclosure relates to the field of communication technology, and more particularly, to a data transmission method and apparatus, a chip, a chip module, and a storage medium.

BACKGROUND

Due to limitation of an uplink/downlink slot ratio in a time division duplex (TDD) system, transmission delay of the TDD system is relatively large. In order to reduce implementation complexity of a base station, all frequency-domain resources of one TDD carrier are required to have the same transmission direction, i. e. are all uplink or all downlink, at the same time, that is, uplink/downlink slot ratios of different frequency-domain resources in one TDD carrier at the same time cannot be configured flexibly.

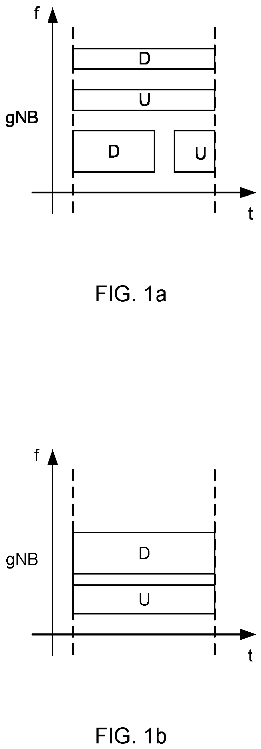

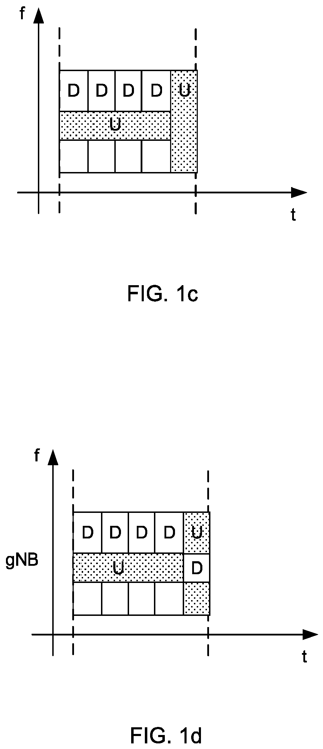

With diversification of services, especially in consideration of service requirements in vertical industry, different services have different requirements for uplink/downlink transmission, and a single uplink/downlink slot ratio cannot meet requirements of different services. In view of the above two points and in consideration of implementation complexity of a base station, a sub-band full duplex (SBFD) scheme is proposed: at a base-station side, uplink and downlink transmission is partitioned in frequency domain based on sub-bands. As such, while ensuring that uplink and downlink transmission can be performed at the same time, by means of frequency division, it is possible to reduce interference and thus reduce complexity of the base station, which is simpler in implementation and has become a standardized hot issue. With regard to SBFD, there can be different forms, as illustrated in FIG. 1a to FIG. 1d, where $t$ represents time, $f$ represents frequency, $D$ represents downlink, and $U$ represents uplink.

However, in an SBFD scenario, if frequency-domain resources having different transmission directions exist at the same time, there is currently no scheme regarding how to perform data transmission.

SUMMARY

A data transmission method and apparatus, a chip, a chip module, and a storage medium are provided, which are intended for realizing data transmission in a sub-band full duplex (SBFD) scenario.

In a first aspect, a data transmission method is provided. The method includes the following. $M$ resources are determined from a frequency-domain resource set, where $M$ resources are $M$ resource block (RB) sets or $M$ RBs, the frequency-domain resource set includes at least one segment of frequency-domain resources, the at least one segment of frequency-domain resources includes at least one segment of uplink frequency-domain resources and/or at least one segment of downlink frequency-domain resources, and $M$ is an integer and $M > 0$. Data transmission is performed with a network device on the $M$ resources.

In this aspect, by determining a resource(s) available for uplink or downlink data transmission in an SBFD scenario and performing data transmission on the resource(s), it is possible to realize data transmission in the SBFD scenario. It should be noted that, "transmission" in the disclosure includes sending and/or receiving.

In a possible implementation, the $M$ resources are $M$ RB sets, and data transmission is performed with the network device on the $M$ resources as follows. Data transmission is performed with the network device on an available RB set in the $M$ RB sets.

In this implementation, it is possible to fully utilize an available RB set in order for data transmission.

In another possible implementation, the method further includes the following. Configuration information is received, where the configuration information is used for configuring $N$ RB sets, the $N$ RB sets belong to the $M$ RB sets, and $N$ is an integer and $N > 0$. An available RB set for transmitting data is determined from the $N$ RB sets.

In this implementation, the configuration information may be, for example, a frequency domain resource assignment field in downlink control information (DCI). Alternatively, the $N$ RB sets may be frequency-domain resources configured via higher-layer signaling.

In another possible implementation, the available RB set for transmitting the data refers to an RB set in which all RBs are available.

In this implementation, all RBs in an available RB set for transmitting the data are available RBs, and data transmission is performed on the available RB set, which is simple in implementation.

In another possible implementation, a size of the data is determined according to RBs in the available RB set for transmitting the data.

In another possible implementation, the available RB set for transmitting the data refers to an RB set in which all RBs include an available RB.

In this implementation, all RBs in an available RB set for transmitting data include an available RB, so that the available RBs can be fully utilized for data transmission, thereby improving resource utilization.

In another possible implementation, a size of the data is determined according to the available RB in the available RB set for transmitting the data.

In another possible implementation, the $M$ resources are $M$ RB sets, and the RB sets are obtained by partitioning at a granularity of frequency-domain resource.

In this implementation, the RB sets are obtained by partitioning based on a sub-band.

In another possible implementation, the $M$ resources are $M$ RB sets, and the RB sets are obtained by partitioning at a granularity of a whole formed by some or all of frequency-domain resources having the same transmission direction.

In this implementation, the RB sets are obtained by partitioning based on a sub-band direction.

In another possible implementation, the $M$ resources are $M$ RB sets, and RBs in each RB set are virtual resource blocks (VRBs).

In this implementation, the RB set is a VRB bundle (i. e. an RB bundle consisting of VRBs in the following). Before interleaved mapping is performed, a VRB bundle can be firstly determined, where $M$ VRB bundles may include an available VRB bundle(s) and/or an unavailable VRB bundle(s).

In another possible implementation, the $M$ resources are $M$ RB sets, and the RB sets are precoding resource block groups (PRGs).

In this implementation, the PRGs may be obtained by partitioning before precoding, and the $M$ PRGs may include an available PRG(s) and/or an unavailable PRG(s).

In another possible implementation, the $M$ resources are $M$ RBs, and the method further includes the following. Indication information is received, where the indication information indicates a starting RB and the number of RBs in the $M$ RBs, and the starting RB and the number of RBs are determined by taking some or all of frequency-domain resources having the same transmission direction as a whole. Data transmission is performed with the network device on the $M$ resources as follows. Data transmission is performed with the network device on the $M$ RBs.

In this implementation, the starting RB and the number of RBs in the $M$ RBs indicated by the indication information are both determined by taking some or all of the frequency-domain resources having the same transmission direction as a whole. Therefore, uplink or downlink transmission in an SBFD scenario can be performed on the $M$ RBs, so that available frequency-domain resources having the same transmission direction can be fully utilized for data transmission.

In a second aspect, a data transmission method is provided. The method includes the following. $M$ resources are determined from a frequency-domain resource set, where $M$ resources are $M$ RB sets or $M$ RBs, the frequency-domain resource set includes at least one segment of frequency-domain resources, the at least one segment of frequency-domain resources includes at least one segment of uplink frequency-domain resources and/or at least one segment of downlink frequency-domain resources, and $M$ is an integer and $M > 0$. Data transmission is performed with a terminal device on the $M$ resources.

In this aspect, by determining a resource(s) for uplink or downlink data transmission in an SBFD scenario and performing data transmission on the resource(s), it is possible to realize data transmission in the SBFD scenario.

In a possible implementation, the $M$ resources are $M$ RB sets, and data transmission is performed with the terminal device on the $M$ resources as follows. Data transmission is performed with the terminal device on an available RB set in the $M$ RB sets.

In another possible implementation, the method further includes the following. Configuration information is sent, where the configuration information is used for configuring $N$ RB sets, the $N$ RB sets belong to the $M$ RB sets, and $N$ is an integer and $N > 0$. An available RB set for transmitting data is determined from the $N$ RB sets.

In another possible implementation, the available RB set for transmitting the data refers to an RB set in which all RBs are available.

In another possible implementation, a size of the data is determined according to RBs in the available RB set for transmitting the data.

In another possible implementation, the available RB set for transmitting the data refers to an RB set in which all RBs include an available RB.

In another possible implementation, a size of the data is determined according to the available RB in the available RB set for transmitting the data.

In another possible implementation, the $M$ resources are $M$ RB sets, and the RB sets are obtained by partitioning at a granularity of frequency-domain resource.

In another possible implementation, the $M$ resources are $M$ RB sets, and the RB sets are obtained by partitioning at a granularity of a whole formed by some or all of frequency-domain resources having the same transmission direction.

In another possible implementation, the *M* resources are *M* RB sets, and RBs in each RB set are VRBs.

In another possible implementation, the *M* resources are *M* RB sets, and the RB sets are PRGs.

In another possible implementation, the *M* resources are *M* RBs, and the method further includes the following. Indication information is sent, where the indication information indicates a starting RB and the number of RBs in the *M* RBs, and the starting RB and the number of RBs are determined by taking some or all of frequency-domain resources having the same transmission direction as a whole. Data transmission is performed with the terminal device on the *M* resources as follows. Data transmission is performed with the terminal device on the *M* RBs.

In a third aspect, a data transmission apparatus is provided, which may implement the data transmission method in the first aspect. For example, the data transmission apparatus may be a chip or a terminal device, and the foregoing method may be implemented by software, hardware, or hardware executing corresponding software.

In a possible implementation, the data transmission apparatus includes a processing unit and a transceiver unit. The processing unit is configured to determine *M* resources from a frequency-domain resource set, where the *M* resources are *M* RB sets or *M* RBs, the frequency-domain resource set includes at least one segment of frequency-domain resources, the at least one segment of frequency-domain resources includes at least one segment of uplink frequency-domain resources and/or at least one segment of downlink frequency-domain resources, and *M* is an integer and *M* > 0. The transceiver unit is configured to perform data transmission with A network device on the *M* resources.

Optionally, the *M* resources are RB sets, and the transceiver unit is specifically configured to perform data transmission with the network device on an available RB set in the *M* RB sets.

In another possible implementation, the transceiver unit is further configured to receive configuration information, where the configuration information is used for configuring *N* RB sets, the *N* RB sets belong to the *M* RB sets, and *N* is an integer and *N* > 0. The processing unit 161 is further configured to determine the available RB set for transmitting data from the *N* RB sets.

Optionally, the available RB set for transmitting the data refers to an RB set in which all RBs are available.

Optionally, a size of the data is determined according to RBs in the available RB set for transmitting the data.

Optionally, the available RB set for transmitting the data refers to an RB set in which all RBs include an available RB.

Optionally, a size of the data is determined according to the available RB in the available RB set for transmitting the data.

Optionally, the *M* resources are *M* RB sets, and the RB sets are obtained by partitioning at a granularity of frequency-domain resource.

Optionally, the *M* resources are *M* RB sets, and the RB sets are obtained by partitioning at a granularity of a whole formed by some or all of frequency-domain resources having the same transmission direction.

Optionally, the *M* resources are *M* RB sets, and RBs in each RB set are VRBs.

Optionally, the *M* resources are *M* RB sets, and the RB sets are PRGs.

Optionally, the *M* resources are *M* RBs, and the transceiver unit is further configured to receive indication information, where the indication information indicates a starting RB and the number of RBs in the *M* RBs, and the starting RB and the number of RBs are determined by taking some or all of frequency-domain resources having the same transmission direction as a whole. The transceiver unit is specifically configured to perform data transmission with the network device on the *M* RBs.

In a fourth aspect, a data transmission apparatus is provided, which may implement the data transmission method in the second aspect. For example, the data transmission apparatus may be a chip or a network device, and the foregoing method may be implemented by software, hardware, or hardware executing corresponding software.

In a possible implementation, the data transmission apparatus includes a processing unit and a transceiver unit. The processing unit is configured to determine *M* resources from a frequency-domain resource set, where the *M* resources are *M* RB sets or *M* RBs, the frequency-domain resource set includes at least one segment of frequency-domain resources, the at least one segment of frequency-domain resources includes at least one segment of uplink frequency-domain resources and/or at least one segment of downlink frequency-domain resources, and *M* is an integer and *M* > 0. The transceiver unit 162 is configured to perform data transmission with a terminal device on the *M* resources.

Optionally, the *M* resources are *M* RB sets, and the transceiver unit 162 is specifically configured to perform data transmission with the terminal device on an available RB set in the *M* RB sets.

Optionally, the transceiver unit is further configured to send configuration information, where the configuration information is used for configuring N RB sets, the *N* RB sets belong to the *M* RB sets, and *N* is an integer and *N* > 0. The processing unit is further configured to determine the available RB set for transmitting data from the *N* RB sets.

Optionally, the available RB set for transmitting the data refers to an RB set in which all RBs are available.

Optionally, a size of the data is determined according to RBs in the available RB set for transmitting the data.

Optionally, the available RB set for transmitting the data refers to an RB set in which all RBs include an available RB.

Optionally, a size of the data is determined according to the available RB in the available RB set for transmitting the data.

Optionally, the $M$ resources are $M$ RB sets, and the RB sets are obtained by partitioning at a granularity of frequency-domain resource.

Optionally, the $M$ resources are $M$ RB sets, and the RB sets are obtained by partitioning at a granularity of a whole formed by some or all of frequency-domain resources having the same transmission direction.

Optionally, the $M$ resources are $M$ RB sets, and RBs in each RB set are VRBs.

Optionally, the $M$ resources are $M$ RB sets, and the RB sets are PRGs.

Optionally, the $M$ resources are $M$ RBs, and the transceiver unit 162 is further configured to send indication information, where the indication information indicates a starting RB and the number of RBs in the $M$ RBs, and the starting RB and the number of RBs are determined by taking some or all of frequency-domain resources having the same transmission direction as a whole. The transceiver unit is specifically configured to perform data transmission with the terminal device on the $M$ RBs.

With reference to the third aspect or the fourth aspect, in another possible implementation, the data transmission apparatus in the third aspect or the fourth aspect includes a processor coupled to a memory. The processor is configured to support the apparatus to execute corresponding functions in the foregoing data transmission method. The memory is coupled to the processor, and is configured to store necessary programs (instructions) and/or data of the apparatus. Optionally, the data transmission apparatus can further include a communication interface, where the communication interface is configured to support communication between the apparatus and other network elements. Optionally, the memory may be located inside the data transmission apparatus, or may be located outside the data transmission apparatus.

With reference to the third aspect or the fourth aspect, in another possible implementation, the data transmission apparatus in the third aspect or the fourth aspect includes a processor and a transceiver apparatus. The processor is coupled to the transceiver apparatus, and the processor is configured to execute computer programs or instructions, so as to control the transceiver apparatus to receive and send information. The processor is further configured to implement the foregoing method by using a logic circuit or executing code instructions when executing the computer programs or instructions. The transceiver apparatus may be a transceiver, a transceiver circuit, or an input/output interface, and is configured to receive signals from other data transmission apparatuses except the data transmission apparatus and transmit the signals to the processor; or send signals from the processor to other data transmission apparatuses except the data transmission apparatus. When the data transmission apparatus is a chip, the transceiver apparatus is a transceiver circuit or an input/output interface.

When the data transmission apparatus in the third aspect or the fourth aspect is a chip or a chip module, the sending unit may be an output unit, such as an output circuit or a communication interface; and the receiving unit may be an input unit, such as an input circuit or a communication interface. When the data transmission apparatus is a terminal device or a network device, the sending unit may be a transmitter, and the receiving unit may be a receiver.

In a fifth aspect, a computer-readable storage medium is provided. The computer-readable storage medium is configured to store computer programs or instructions which, when executed, are operable to implement the method described in the foregoing aspects.

In a sixth aspect, a computer program product is provided. The computer program product includes instructions which, when executed by a computer, are operable with the computer to implement the method described in the foregoing aspects.

In a seventh aspect, a communication system is provided. The communication system includes the data transmission apparatus in the third aspect and the data transmission apparatus in the fourth aspect.

BRIEF DESCRIPTION OF THE DRAWINGS

FIG. 1a to FIG. 1d each are a schematic diagram illustrating sub-band full duplex (SBFD).

FIG. 2 is a schematic structural diagram of a communication system provided in embodiments of the disclosure.

FIG. 3 is a schematic structural diagram of another communication system provided in embodiments of the disclosure.

FIG. 4 is a schematic structural diagram of yet another communication system provided in embodiments of the disclosure.

FIG. 5 is a schematic flow chart of a data transmission method provided in embodiments of the disclosure.

FIG. 6 is a schematic diagram illustrating *M* resource block groups (RBGs) according to embodiments of the disclosure.

FIG. 7 is a schematic diagram illustrating another *M* RBGs according to embodiments of the disclosure.

FIG. 8 is a schematic diagram illustrating yet another *M* RBGs according to embodiments of the disclosure.

FIG. 9 is a schematic diagram illustrating *M* RB bundles according to embodiments of the disclosure.

FIG. 10 is a schematic diagram illustrating another *M* RB bundles according to embodiments of the disclosure.

FIG. 11 is a schematic diagram illustrating yet another *M* RB bundles according to embodiments of the disclosure.

FIG. 12 is a schematic diagram illustrating *M* precoding resource block groups (PRGs) according to embodiments of the disclosure.

FIG. 13 is a schematic diagram illustrating another *M* PRGs according to embodiments of the disclosure.

FIG. 14 is a schematic diagram illustrating yet another *M* PRGs according to embodiments of the disclosure.

FIG. 15 is a schematic diagram illustrating indication of a starting RB and the number of RBs according to embodiments of the disclosure.

FIG. 16 is a schematic structural diagram of a data transmission apparatus provided in embodiments of the disclosure.

FIG. 17 is a schematic simplified structural diagram of a terminal device provided in embodiments of the disclosure.

FIG. 18 is a schematic simplified structural diagram of a network device provided in embodiments of the disclosure.

## DETAILED DESCRIPTION

The technical solutions of embodiments of the disclosure will be described below with reference to the accompanying drawings in the embodiments of the disclosure.

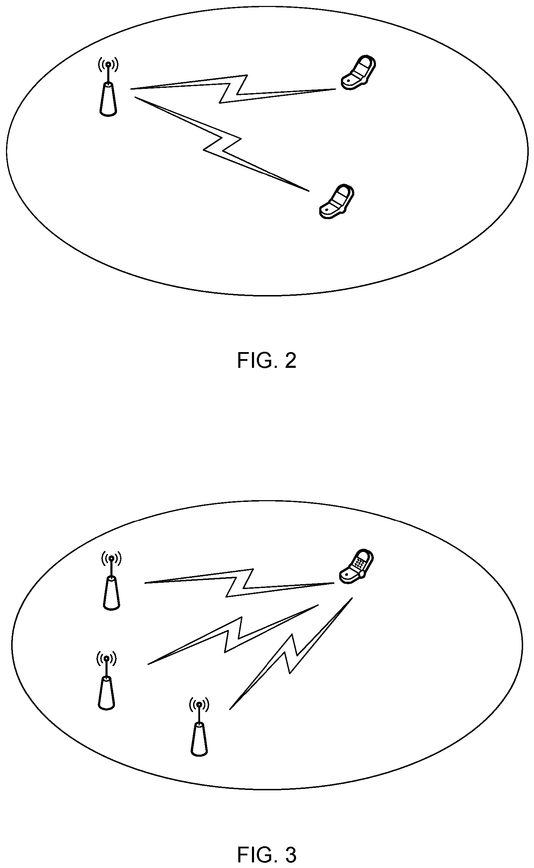

FIG. 2 is a schematic diagram of a communication system according to embodiments of the disclosure. The communication system may include one or more network devices (only one network device is illustrated in FIG. 2) and one or more terminal devices for communicating with the network device. The network device may transmit data and/or control signaling to one or more terminal devices. In another communication system illustrated in FIG. 3, multiple network devices may also transmit data and/or control signaling to one terminal device at the same time.

The network device may be a base station, an evolved NodeB (eNodeB), a transmission reception point (TRP), a next-generation NodeB (gNB) in a 5th generation (5G) mobile communication system, a next-generation base station in a 6th generation (6G) mobile communication system, a base station in a future mobile communication system, or an access node in a wireless fidelity (WiFi) system, etc.; or may be a module or unit for completing some functions of the base station, for example, may be a central unit (CU) or a distributed unit (DU). The network device may be a macro base station, a micro base station or an indoor station, or a relay node or a donor node. In embodiments of the disclosure, there is no limitation on the specific technology and specific device form applied to the network device. For ease of illustration, the base station will be taken as an example of the network device for illustration below.

The terminal device is a device having a wireless transceiver function. The terminal device may be deployed on land (including indoor or outdoor), and may be handheld, wearable, or in-vehicle; or may be deployed on water, such as a ship or the like; or may be deployed in the air, such as an airplane, a balloon, and a satellite, or the like. The terminal device may be a mobile phone, a tablet computer (pad), a computer with a wireless transceiver function, a wearable device, an unmanned aerial vehicle, a helicopter, an airplane, a ship, a robot, a mechanical arm, a smart home device, a virtual reality (VR) terminal device, an augmented reality (AR) terminal device, a wireless terminal device in industrial control, a wireless terminal device in self-driving, a functional module in an entire car or vehicle, a wireless terminal device in remote medicine, a wireless terminal device in smart grid, a wireless terminal device in transportation safety, a wireless terminal device in smart city (for example, a street lamp, etc.), a wireless terminal device in smart home, etc. The application scenario is not limited in embodiments of the disclosure. The terminal device sometimes may also be referred to as a user equipment (UE), an access terminal device, a UE unit, a mobile station, a remote station, a remote terminal device, a mobile device, a terminal, a wireless communication device, a UE proxy, a UE apparatus, or the like. In embodiments of the disclosure, there is no limitation on the specific technology and specific device form applied to the terminal device.

The base station and the terminal device may be immobile or mobile. The base station and the terminal device may be deployed on land, including indoor or outdoor, handheld, or in-vehicle; or may be deployed on water; or may be deployed on an airplane, a balloon, or an artificial satellite. In embodiments of the disclosure, there is no limitation on the application scenario of the base station and the terminal device.

The base station and the terminal device, or base stations, or terminal devices may communicate on a licensed spectrum, or may communicate on an unlicensed spectrum, or may communicate on a licensed spectrum and an unlicensed frequency spectrum at the same time. Communication may be performed on a spectrum below 6 gigahertz (GHz), or may be performed on a spectrum above 6 GHz, or may be performed on a spectrum below 6 GHz and a spectrum above 6 GHz at the same time. The spectrum resource used for wireless communication is not limited in embodiments of the disclosure.

In embodiments of the disclosure, the function of the base station may also be implemented by a module (e. g., chip) in the base station, or may be implemented by a control subsystem having the function of the base station. The control subsystem having the function of the base station herein may be a control center in the foregoing application scenarios such as smart grid, industrial control, smart transportation, and smart city. The function of the terminal device may also be implemented by a module (such as chip or modem) in the terminal device, or may be implemented by an apparatus having the function of the terminal device.

Optionally, in the embodiment of the disclosure, the terminal device or the network device includes a hardware layer, an operating system layer running above the hardware layer, and an application layer running above the operating system layer. The hardware layer includes a central processing unit (CPU), a memory management unit (MMU), a memory (also called main memory), or other hardware. The operating system may be any one or various computer operating systems that achieve service processing through processes, e.g., a Linux® operating system, a Unix® operating system, an Android® operating system, an iOS® operating system, a Windows® operating system, or the like. The application layer includes a browser, an address book, a word processing software, an instant messaging software, or other applications. Furthermore, a specific structure of the execution entity of the method provided in embodiments of the disclosure is not particularly limited herein, as long as the execution entity can perform communication according to the method provided in embodiments of the disclosure by running a program containing codes for realizing the method provided in embodiments of the disclosure. For example, the execution entity of the method provided in embodiments of the disclosure may be a terminal device or a network device or a function module that is in the terminal or the network device and can invoke and execute the program.

In other words, related functions of the terminal device or the network device in embodiments of the disclosure may be implemented by one device, or may be implemented by multiple devices together, or may be implemented by one or more functional modules in one device, which is not specifically limited in embodiments of the disclosure. It is understandable that the foregoing functions may be network elements in a hardware device, software functions running on dedicated hardware, a combination of hardware and software, or virtualization functions instantiated on a platform (for example, a cloud platform).

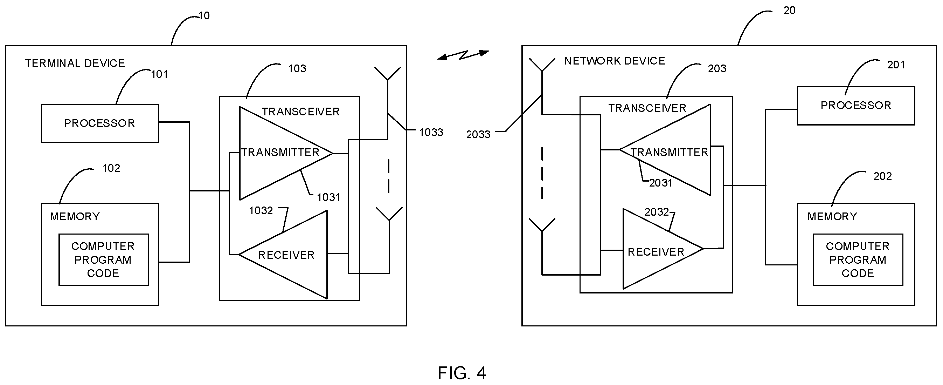

Communication between the network device and the terminal device in the communication system illustrated in FIG. 2 and FIG. 3 may also be represented in another form. As illustrated in FIG. 4, the terminal device 10 includes a processor 101, a memory 102, and a transceiver 103, where the transceiver 103 includes a transmitter 1031, a receiver 1032, and an antenna 1033. The network device 20 includes a processor 201, a memory 202, and a transceiver 203, where the transceiver 203 includes a transmitter 2031, a receiver 2032, and an antenna 2033. The receiver 1032 may be configured to receive information via the antenna 1033, and the transmitter 1031 may be configured to send information to the network device 20 via the antenna 1033. The transmitter 2031 may be configured to send information to the terminal device 10 via the antenna 2033, and the receiver 2032 may be configured to receive information sent by the terminal device 10 via the antenna 2033.

The processor 101/processor 201 may be a CPU, a microprocessor, an application-specific integrated circuit (ASIC), or one or more integrated circuits for controlling execution of programs of the solutions of the disclosure.

The memory 102/memory 202 may be a device with storage functions, such as a read-only memory (ROM) or other types of static storage devices that can store static information and instructions, a random access memory (RAM) or other types of dynamic storage devices that can store information and instructions, or may be an electrically erasable programmable read-only memory (EEPROM), a compact disc ROM (CD-ROM) or other optical disc storage (including CD, laser disc, optical disc, digital versatile disc, Blu-ray disc, etc.), a magnetic disk storage medium or other magnetic storage devices, or any other medium that can be used to carry or store desired program codes in the form of instructions or data structures and can be accessed by a computer, which is not however limited thereto. The memory may be present independently and be connected to the processor via a communication line, or may be integrated together with the processor.

The memory 102/memory 202 is configured to store computer executable instructions for executing the solutions of the disclosure, and the execution is controlled by the processor 101/processor 201. The processor 101/processor 201 is configured to execute the computer executable instructions stored in the memory 102/memory 202, so as to implement the data transmission method provided in embodiments of the disclosure.

Alternatively, in embodiments of the disclosure, the processor 101/processor 201 may execute processing-related functions in the data transmission method provided in the following embodiments of the disclosure.

The computer executable instruction in embodiments of the disclosure may also be referred to as application program code, which is not specifically limited in embodiments of the disclosure.

It should be noted that the terms "system" and "network" in embodiments of the disclosure may be used interchangeably.

Firstly, the existing frequency-domain resource allocation is introduced below.

1.1 Frequency-domain resource allocation

A frequency domain resource assignment field *"Frequency domain resource assignment"* in downlink control information (DCI) indicates frequency-domain resource allocation for physical downlink shared channel (PDSCH)/physical uplink shared channel (PUSCH). Frequency-domain resource allocation for PDSCH/PUSCH is classified into two types, namely Type 0 and Type 1, where Type 0 supports non-contiguous allocation, which can achieve frequency diversity gain; and Type 1 supports contiguous resource allocation, which can reduce the number of bits required for the field.

1.1.1 Resource allocation Type 0

A non-contiguous resource allocation type is in a unit of resource block group (RBG), where an RBG consists of P consecutive physical resource blocks (PRBs), as illustrated in Table 1 below. A bandwidth part (BWP) size in Table 1 refers to the number of PRBs in a BWP, and the number of PRBs in an RBG can be referred to as an RBG size. The number of PRBs in an RBG is defined by a higher-layer parameter *"rbg-Size"* and the BWP size. *"rbg-Size"* defines whether the value of P corresponds to Configuration 1 or corresponds to Configuration 2.

Table 1: Nominal RBG size P

| BWP size | Configuration 1 | Configuration 2 |
|----------|-----------------|-----------------|
| 1~36 | 2 | 4 |
| 37~72 | 4 | 8 |
| 73~144 | 8 | 16 |
| 145~275 | 16 | 16 |

As illustrated in line 1 of Table 1, a BWP includes at most 36 PRBs. If Configuration 1 is adopted, each RBG includes 2 PRBs. If Configuration 2 is adopted, each RBG includes 4 PRBs.

Then, the number $N_{RBG}$ of RBGs for BWP *i* is:

$$N_{RBG} = \left\lceil \left( N_{BWP,i}^{size} + \left( N_{BWP,i}^{start} \bmod P \right) \right) / P \right\rceil$$

$N_{BWP,i}^{size}$ is the number of PRBs for BWP *i*. The size of the 1st RBG is $RBG_0^{size} = P - N_{BWP,i}^{start} \bmod P$. If $\left( N_{BWP,i}^{start} + N_{BWP,i}^{size} \right) \bmod P > 0$, the size of the last RBG is $RBG_{last}^{size} = \left( N_{BWP,i}^{start} + N_{BWP,i}^{size} \right) \bmod P$; otherwise, the size of all other RBGs is P.

$N_{BWP,i}^{start}$ is an initial common resource block (CRB) index of the BWP.

Hereinafter, resource allocation for PDSCH is taken as an example, and the same applies to PUSCH.

In resource allocation Type 0, the *"Frequency domain resource assignment"* indicates, via a bitmap, which RBGs are allocated to a PDSCH. Each bit in the bitmap corresponds to one RBG, where the most significant bit corresponds to RBG0, and so forth. If a bit value is 1, it indicates that an RBG is allocated to the PDSCH; and if the bit value is 0, it indicates that the RBG is not allocated to the PDSCH, so that resources can be scheduled flexibly. Generally, an RBG can be mapped directly to a physical resource with the same index.

1.1.2 Resource allocation Type 1

In Type 1, the *"Frequency domain resource assignment"* field does not indicate via a bitmap, but indicates a resource indication value (RIV). A terminal device calculates a starting virtual resource block (VRB) and the number of consecutive VRBs for a PDSCH according to the RIV. The formula for calculation is as follows:

If

$$(L_{RBs} - 1) \leq \left\lfloor N_{BWP}^{size}/2 \right\rfloor, \text{ then } RIV = N_{BWP}^{size}(L_{RBs} - 1) + RB_{start};$$

else,

$$RIV = N_{BWP}^{size}\left(N_{BWP}^{size} - L_{RBs} + 1\right) + (N_{BWP}^{size} - 1 - RB_{start}).$$

where

$$L_{RBs} \geq 1 \text{ and shall not exceed } N_{BWP}^{size} - RB_{start}.$$

$L_{RBs}$ represents the number of consecutive VRBs. $N_{BWP}^{size}$ represents the number of VRBs in a BWP. $RB_{start}$ represents an index of the starting VRB.

For resource Type 1, the following rules are applied for interleaved mapping of data.

1.1.2.1 RB bundle interleaving

In BWP, there are two types of RBs, namely VRB and PRB, where VRB is a virtual resource block, and PRB is an actual physical resource block. Frequency-domain resource allocation for PDSCH and frequency-domain resource allocation for PUSCH each are in a unit of VRB, and then VRBs are mapped to PRBs, where a mapping pattern includes interleaved mapping and non-interleaved mapping. VRBs in a BWP are indexed in an ascending order starting from a starting position with an index of 0 in the BWP, and PRBs in the BWP are indexed in an ascending order starting from a starting position with an index of 0 in the BWP.
In non-interleaved mapping, a VRB with an index of *n* is directly mapped to a PRB with an index of *n.*
In interleaved mapping, a VRB with an index of *n* is mapped to a PRB with an index of f(*n*), where f() is an interleaver function.
Another difference between PUSCH and PDSCH is that PUSCH does not support interleaved mapping.
In interleaved mapping, resources spread across the whole band range of a BWP, thereby achieving frequency diversity gain. However, in order to reduce complexity of channel estimation, interleaving is performed in a unit of RB bundle, where an RB bundle consists of several consecutive RBs, that is, PDSCH interleaving refers to mapping an RB bundle consisting of VRBs to an RB bundle consisting of PRBs.
For example, in one case, the number $L_i$ of RBs in an RB bundle is indicated by higher-layer signaling, and then the number of RB bundles in one BWP is:

$$N_{bundle} = \left\lceil \left(N_{BWP,i}^{size} + \left(N_{BWP,i}^{start} \bmod L_i\right)\right)/L_i \right\rceil$$

$N_{BWP,i}^{size}$ is the number of RBs in BWP *i*, and $N_{BWP,i}^{start}$ is an initial CRB index of BWP *i* relative to CRB0. In this way, RB bundles can be aligned starting from point *A,* and then:

the size of an RB bundle with an index of 0 is $L_i - (N_{BWP,i}^{start} \bmod L_i)$;

the size of an RB bundle with an index of $N_{bundle}$ - 1 is $(N_{BWP,i}^{start} + N_{BWP,i}^{size}) \bmod L_i$;

the size of other RB bundles is $L_i$.

1.1.3 Precoding resource block group (PRG)

A PRG consists of multiple consecutive PRBs. A terminal device assumes that the same precoding is applied for all consecutive PRBs in a PRG, which facilitates decoding by the terminal device according to a received demodulation reference signal (DMRS). The PRG can also be referred to as a PRB bundle.

The number $P'_{BWP,i}$ of PRBs in the PRG is 2 or 4.

The size of the 1st PRG is $P'_{BWP,i} - N^{start}_{BWP,i} \bmod P'_{BWP,i}$. If $(N^{start}_{BWP,i} + N^{size}_{BWP,i}) \bmod P'_{BWP,i} \neq 0$, the size of the last PRG is $(N^{start}_{BWP,i} + N^{size}_{BWP,i}) \bmod P'_{BWP,i}$; and if $(N^{start}_{BWP,i} + N^{size}_{BWP,i}) \bmod P'_{BWP,i} = 0$, the size of the last PRG is $P'_{BWP,i}$.

In a sub-band full duplex (SBFD) scenario, at the same time, reception is performed on some frequency-domain resource(s), and sending is performed on some other frequency-domain resource(s). In the foregoing frequency-domain resource allocation, whether a resource is used for uplink transmission or is used for downlink transmission in an SBFD scenario is not taken into consideration.

In view of this, embodiments of the disclosure provide a data transmission scheme. By determining a resource(s) for uplink or downlink data transmission in an SBFD scenario and performing data transmission on the resource(s), it is possible to realize data transmission in an SBFD scenario.

A data transmission method provided in embodiments of the disclosure will be described in detail below.

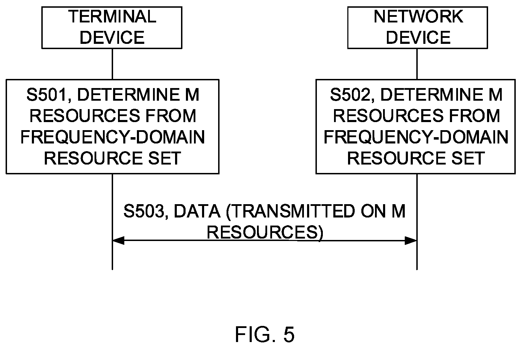

FIG. 5 is a schematic flow chart of a data transmission method provided in embodiments of the disclosure. Exemplarily, the method can include the following steps.

S501, a terminal device determines $M$ resources from a frequency-domain resource set.

S502, a network device determines the $M$ resources from the frequency-domain resource set.

S503, the terminal device performs data transmission with the network device on the $M$ resources, and accordingly, the network device performs data transmission with the terminal device on the $M$ resources. That is, the terminal device and the network device perform data transmission on the $M$ resources.

The data in the disclosure may be, for example, a transport block (TB), a codeword (CW), or the like.

In embodiments of the disclosure, the frequency-domain resource set can be one or more BWPs or one or more carriers. The frequency-domain resource set includes at least one segment of frequency-domain resources, where the at least one segment of frequency-domain resources includes at least one segment of uplink frequency-domain resources and/or at least one segment of downlink frequency-domain resources. For the convenience of illustration, the technical solutions provided in the disclosure will be exemplified below by taking a BWP as an example of the frequency-domain resource set.

The uplink frequency-domain resource is a segment of consecutive frequency-domain resources, for example, a segment of consecutive RBs or sub-carriers, and is a frequency-domain resource used only for uplink transmission. Exemplarily, the uplink frequency-domain resource may be an uplink sub-band in SBFD.

The downlink frequency-domain resource is a segment of consecutive frequency-domain resources, for example, a segment of consecutive RBs or subcarriers, and is a frequency-domain resource used only for downlink transmission. Exemplarily, the downlink frequency-domain resource may be a downlink sub-band in SBFD.

Sub-band partitioning and/or a transmission direction (uplink or downlink) of each sub-band in the SBFD scenario may be configured by the network device, or may be specified in a protocol, or may be determined in another manner, which is not limited in the disclosure.

For the terminal device, the frequency-domain resource set may be configured for the terminal device by the network device, or may be preset in the terminal device, or may be specified in a protocol, or may be determined through negotiation between the terminal device and the network device, which is not limited in the disclosure.

In embodiments of the disclosure, data transmission includes sending data and/or receiving data. For example, in S503, the terminal device may send a PUSCH to the network device and/or receive a PDSCH from the network device on the $M$ resources.

The terminal device and the network device can determine the $M$ resources from the above frequency-domain resource set in the same manner. The $M$ resources are $M$ RB sets or $M$ RBs, where $M$ is an integer and $M > 0$. The technical solutions provided in the disclosure will be exemplified below with reference to case 1 (the $M$ resources are $M$ RB sets) and case 2 (the $M$ resources are $M$ RBs).

Case 1: the M resources are $M$ RB sets.

In case 1, the $M$ resources refer to resources obtained by partitioning the frequency-domain resource set into RB sets, where each RB set is one resource. Some or all of the $M$ resources may be allocated to the terminal device by the network device for data transmission in a subsequent procedure.

In case 1, in an implementation, the RB set may be the RBG described above. In this case, the RB set is described as an RBG in the following, that is, the RBG below means that the RB set is an RBG.

In case 1, in another implementation, RBs in the RB set are VRBs, and the RB set may be an RB bundle consisting of VRBs. In this case, the RB set is described as an RB bundle in the following, that is, the RB bundle below means that the RB set is an RB bundle consisting of VRBs.

In case 1, in yet another implementation, the RB set may be a PRG. In this case, the RB set is described as a PRG in the following, that is, the PRG below means that the RB set is a PRG.

In order to make the disclosure clearer, the technical solutions provided in the disclosure are exemplified with reference to case 1.1 (the RB set is an RBG), case 1.2 (the RB set is an RB bundle consisting of VRBs), and case 1.3 (the RB set is a PRG).

Case 1.1: the RB set is an RBG.

In case 1.1, each of the M RBGs includes multiple consecutive RBs, that is, multiple consecutive RBs constitute one RBG.

In case 1.1, RBGs may be obtained by partitioning in an existing manner, or may be obtained by partitioning in a new partitioning manner, which will be described below with reference to case 1.1.1 (RBGs are obtained by partitioning in the existing manner) and case 1.1.2 (RBGs are obtained by partitioning in the new partitioning manner).

Case 1.1.1: RBGs are obtained by partitioning in the existing manner.

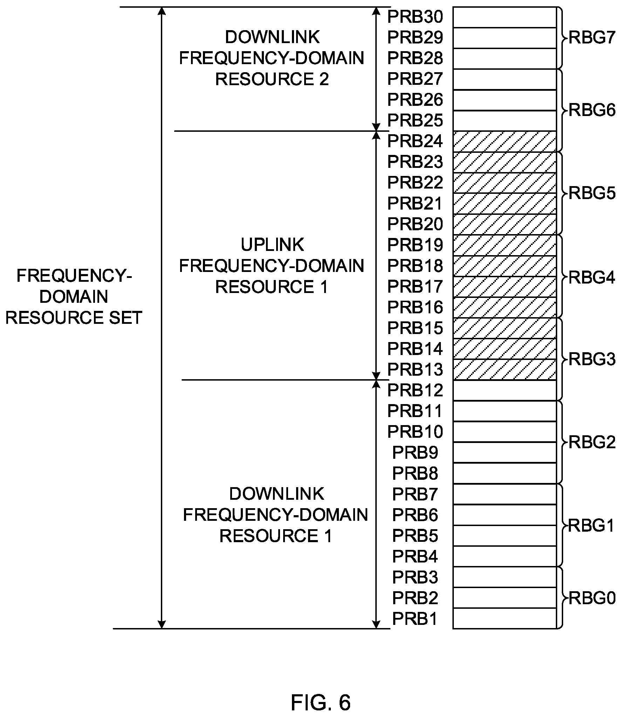

In case 1.1.1, it can be understood that, since the frequency-domain resource set includes both an uplink frequency-domain resource(s) and a downlink frequency-domain resource(s), some RBG may include RBs having different transmission directions. Exemplarily, referring to FIG. 6, FIG. 6 is a schematic diagram illustrating a frequency-domain resource set according to embodiments of the disclosure. The frequency-domain resource set includes downlink frequency-domain resource 1, downlink frequency-domain resource 2, and uplink frequency-domain resource 1. The frequency-domain resource set is partitioned into eight RBGs: RBG0 ~ RBG7. RBs in each of RBG0 ~ RBG2 and RBG7 are all RBs for downlink transmission, RBs in each of RBG4 and RBG5 are all RBs for uplink transmission, and RBG3 and RBG6 each include both an RB(s) for uplink transmission and an RB(s) for downlink transmission.

In case 1.1.1, S503 may be specifically implemented as follows. The terminal device performs data transmission with the network device on an available RBG(s) in the M RBGs. Accordingly, the network device performs data transmission with the terminal device on the available RBG(s) in the M RBGs. That is, the terminal device and the network device perform data transmission on the available RBG(s) in the M RBGs. For example, the terminal device sends data to the network device on the available RBG(s) in the M RBGs, and the network device receives the data from the terminal device on the available RBG(s) in the M RBGs. Alternatively, the network device sends data to the terminal device on the available RBG(s) in the M RBGs, and the terminal device receives the data from the network device on the available RBG(s) in the M RBGs.

In one case, the available RBG refers to an RBG in which all RBs are available, and in this case, the size of data is determined according to RBs in the available RBG for transmitting the data. In another case, the available RBG refers to an RBG in which all RBs include an available RB, and in this case, the size of data is determined according to the available RB in the available RBG for transmitting the data. The available RBG(s) for transmitting the data may be some or all of the available RBGs. The available RBs in the disclosure refers to RBs having the same transmission direction, while the remaining RBs are all unavailable RBs. For example, if uplink transmission is to be performed, an RB available for uplink transmission is an available RB, while an RB available for downlink transmission is an unavailable RB. If downlink transmission is to be performed, an RB available for downlink transmission is an available RB, while an RB available for uplink transmission is an unavailable RB. Exemplarily, referring to FIG. 6, if uplink transmission is to be performed, PRB13 ~ PRB24 available for uplink transmission are available RBs, while PRB1 ~ PRB12 and PRB25 ~ PRB30 available for downlink transmission are unavailable RBs. If downlink transmission is to be performed, PRB1 ~ PRB12 and PRB25 ~ PRB30 available for downlink transmission are available RBs, while PRB13 ~ PRB24 available for uplink transmission are unavailable RBs.

In case 1.1.1, a VRB with an index of $n$ is mapped to a PRB with an index of $n$. The available RB in case 1.1.1 refers to an available PRB, but the VRB with an index of $n$ is mapped to the PRB with an index of $n$. Therefore, it may also be considered that the available RB is an available VRB.

In case 1.1.1, the method further includes the following. The network device sends configuration information (denoted as first configuration information), where the first configuration information is used for configuring $N$ RBGs, the $N$ RBGs belong to the $M$ RBGs, and $N$ is an integer and $N > 0$. Accordingly, the terminal device receives the first configuration information, and determines the available RBG(s) for data transmission from the $N$ RBGs. It can be understood that, in order to send data to the terminal device or receive data sent by the terminal device, the network device also needs to determine the available RBG(s) for data transmission from the $N$ RBGs.

For the configuration of $N$ RBGs, there are several examples below.

In an example, the $N$ RBGs configured by the network device are not allowed to include an unavailable RB, that is, all RBs in each of the $N$ RBGs are available. Still referring to FIG. 6, if a resource for downlink transmission needs to be configured, although RBG3 and RBG6 each include an available PRB(s), RBG3 and RBG6 each also include an unavailable RB(s) (specifically, RBG3 includes PRB13 ~ PRB15 for uplink transmission, and RBG6 includes PRB24 for uplink transmission), then RBG3 ~ RBG6 are not configured for downlink transmission by the network device. In addition, all RBs in each of RBG4 and RBG5 are unavailable, and therefore, the $N$ RBGs configured by the network device do not include RBG3 ~ RBG6. If a resource for uplink transmission needs to be configured, although RBG3 and RBG6 each include an available PRB(s), RBG3 and RBG6 each also include an unavailable RB(s) (specifically, RBG 3 includes PRB12 for downlink transmission, and RBG 6 includes PRB25 ~ PRB27 for downlink transmission), then RBG3 and RBG6 are not configured for uplink transmission by the network device. In addition, all RBs in each of RBG0 ~ RBG2 and RBG7 are unavailable, and therefore, the $N$ RBGs configured by the network device do not include RBG0 ~ RBG3 and RBG6 ~ RBG7.

In this example, the $N$ RBGs are not allowed to include an unavailable RB, and all RBs in each of the $N$ RBGs are available, which is simple in network configuration.

In another example, the $N$ RBGs configured by the network device is allowed to include an unavailable RB, i. e., each of the $N$ RBGs includes an available RB(s). Still referring to FIG. 6, if a resource for downlink transmission needs to be configured, although RBG3 and RBG6 each include an unavailable RB(s) (specifically, PRB13 ~ PRB15 for uplink transmission in RBG3 are unavailable, and PRB24 for uplink transmission in RBG6 is unavailable), the $N$ RBGs configured by the network device can include RBG3 and RBG 6. If a resource for uplink transmission needs to be configured, although RBG 3 and RBG 6 each include an unavailable RB(s) (specifically, PRB12 for downlink transmission in RBG 3 is unavailable, and PRB25 ~ PRB27 for downlink transmission in RBG 6 are unavailable), the $N$ RBGs configured by the network device can include RBG3 and RBG6.

In this example, the $N$ RBGs configured by the network device are allowed to include an unavailable RB, which improves resource utilization.

Exemplarily, the first configuration information may be a frequency domain resource assignment field in DCI. Taking downlink transmission in an SBFD scenario as an example, the frequency domain resource assignment field indicates, via a bitmap, which RBGs are allocated for PDSCH transmission. Each bit in the bitmap corresponds to one RBG, where the most significant bit corresponds to RBG0, and so forth. If a bit value is 1, it indicates that an RBG is allocated for PDSCH transmission; and if the bit value is 0, it indicates that the RBG is not allocated for PDSCH transmission.

Taking uplink transmission in an SBFD scenario as an example, the frequency domain resource assignment field indicates, via a bitmap, which RBGs are allocated for PUSCH transmission. Each bit in the bitmap correpsonds to one RBG, the most significant bit corresponds to RBG0, and so forth. If a bit value is 1, it indicates that an RBG is allocated for PUSCH transmission; and if the bit value is 0, it indicates that the RBG is not allocated for PUSCH transmission, or vice versa.

Exemplarily, based on the example illustrated in FIG. 6, assuming that downlink transmission is to be performed, and the $N$ RBGs configured by the network device are allowed to include an unavailable RB(s), then the RBG(s) configured by the network device may include $N$ RBGs of RBG0 ~ RGB3, RBG6, and RGB7. Specifically, assuming that $N=4$, and the value of the frequency domain resource assignment field in the DCI sent by the network device is 001100, it indicates that RBG2 and RBG6 are allocated to the terminal device. The network device may send data to the terminal device on RBG2 and RBG6, and the terminal device may receive data from the network device on RBG2 and RBG6. The size of data is determined according to RBs in RBG2 and RBs in RBG6.

Assuming that downlink transmission is to be performed, and the $N$ RBGs configured by the network device are not allowed to include an unavailable RB(s), then the RBG(s) configured by the network device may include $N$ RBGs of the RBG0 ~ RBG2 and RBG 7. Specifically, assuming that $N=2$, if the value of the frequency domain resource assignment field in the DCI sent by the network device is 0011, it indicates that RBG2 and RBG7 are allocated to the terminal device. That is, the network device may send data to the terminal device on RBG2 and RBG7, and the terminal device may receive data from the network device on RBG2 and RBG7. The size of data is determined according to RBs in RBG2 and RBs in RBG7.

Based on the example illustrated in FIG. 6, assuming that uplink transmission is to be performed, and the $N$ RBGs configured by the network device are allowed to include an unavailable RB(s), then the RBG(s) configured by the network device may include $N$ RBGs of RBG3 ~ RBG6. Specifically, assuming that $N=2$, and the value of the frequency domain resource assignment field in the DCI sent by the network device is 0011, it indicates that RBG5 and RBG6 are allocated to the terminal device. That is, the terminal device may send data to the network device on RBG5 and RBG6, and the network device may receive data from the terminal device on RBG5 and RBG6. The size of data is determined according to available RBs in RBG5 and RBs in RBG6.

Assuming that uplink transmission is to be performed, and the $N$ RBGs configured by the network device are not allowed to include an unavailable RB(s), then the RBG(s) configured by the network device may include $N$ RBGs of RBG4 and RBG5. Specifically, assuming that $N=1$, and the value of the frequency domain resource assignment field in the DCI sent by the network device is 01, it indicates that the RBG5 is allocated to the terminal device. That is, the terminal device may send data to the network device on RBG5, and the network device may receive data from the terminal device on RBG5. The size of data is determined according to RBs in RBG 5.

By adopting the manner illustrated in case 1.1.1, in an SBFD scenario, RBGs can be obtained by partitioning in the existing manner, which is simple in implementation and causes only slight change to a protocol.

Case 1.1.2: RBGs are obtained by partitioning in the new partitioning manner.

The new partitioning manner may be the following manner 1 or manner 2.

Manner 1: the RBGs are obtained by partitioning at a granularity of frequency-domain resource. That is, for each frequency-domain resource, for example, for each sub-band, the $1^{st}$ RBG, the last RBG, and the number of RBG(s) therebetween (that is, between the $1^{st}$ RBG and the last RBG) in the frequency-domain resource are determined according to the formula in the foregoing "1.1.1 resource allocation Type 0". Specifically, for a downlink frequency-domain resource in the frequency-domain resource set, the $1^{st}$ RBG, the last RBG, and the number of RBG(s) therebetween in the downlink frequency-domain resource are determined. For an uplink frequency-domain resource in the frequency-domain resource set, the $1^{st}$ RBG, the last RBG, and the number of RBG(s) therebetween in the uplink frequency-domain resource are determined.

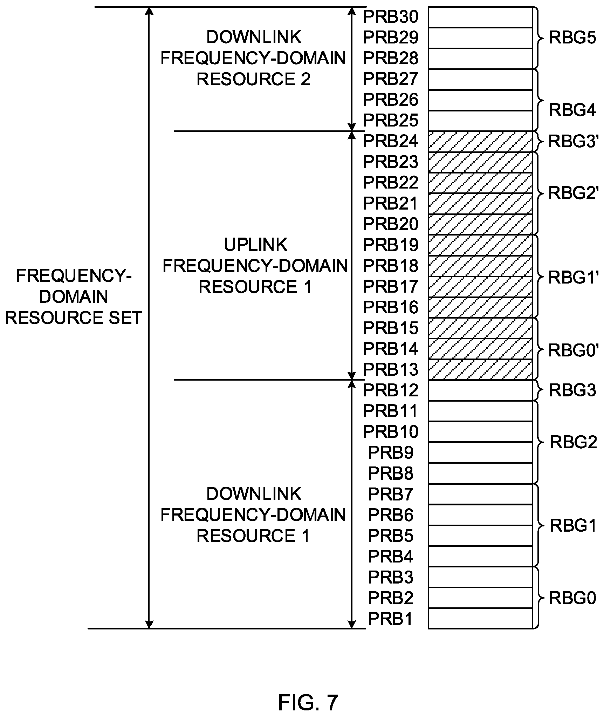

Exemplarily, FIG. 7 is a schematic diagram illustrating another frequency-domain resource set according to embodiments of the disclosure, where the frequency-domain resource set includes RBs in downlink frequency-domain resource 1, RBs in downlink frequency-domain resource 2, and RBs in uplink frequency-domain resource 1. RBGs are obtained by partitioning each of downlink frequency-domain resource 1, downlink frequency-domain resource 2, and uplink frequency-domain resource 1. RBGs in downlink frequency-domain resource 1 and RBGs in downlink frequency-domain resource 2 are numbered separately from RBGs in uplink frequency-domain resource 1. RBGs in downlink frequency-domain resource 1 may be numbered jointly with or separately from RBGs in downlink frequency-domain resource 2. In FIG. 7, RBGs in downlink frequency-domain resource 1 are numbered jointly with RBGs in downlink frequency-domain resource 2 as an example for illustration. For downlink frequency-domain resource 1 (for example, downlink sub-band 1), downlink frequency-domain resource 1 includes RBG0 ~ RBG3. For uplink frequency-domain resource 1 (for example, uplink sub-band 1), uplink frequency-domain resource 1 includes RBG0' ~ RBG3'. For downlink frequency-domain resource 2 (for example, downlink sub-band 2), downlink frequency-domain resource 2 includes RBG4 ~ RBG5.

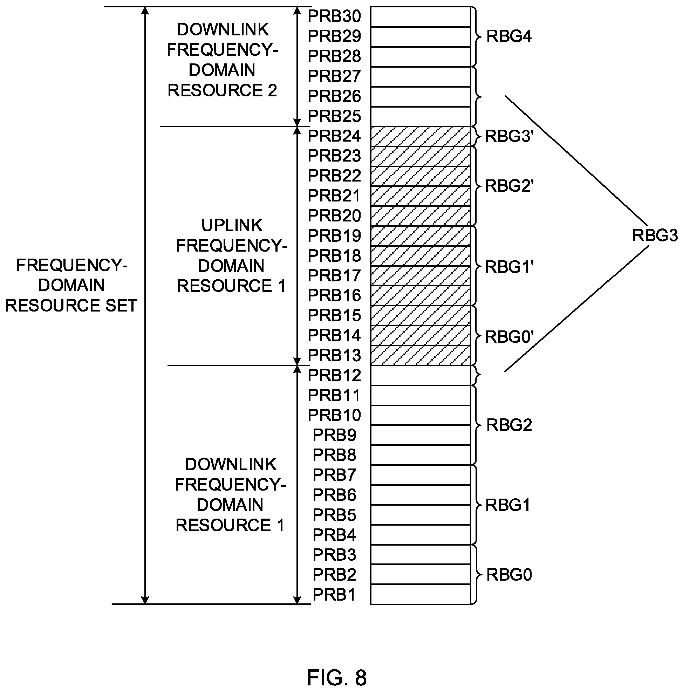

Manner 2: the RBGs are obtained by partitioning at a granularity of a whole formed by some or all of frequency-domain resources having the same transmission direction. For example, for all frequency-domain resources having the same direction (e. g., all sub-bands having the same direction), the $1^{st}$ RBG, the last RBG, and the number of RBGs therebetween in all the frequency-domain resources having the same direction may be determined according to the formula in the foregoing "1.1.1 resource allocation Type 0". Specifically, for all downlink frequency-domain resources in the frequency-domain resource set, the $1^{st}$ RBG, the last RBG, and the number of RBGs therebetween in these downlink frequency-domain resources in the frequency-domain resource set are determined. For all uplink frequency-domain resources in the frequency-domain resource set, the $1^{st}$ RBG, the last RBG, and the number of RBGs therebetween in these uplink frequency-domain resources in the frequency-domain resource set are determined. FIG. 8 is a schematic diagram illustrating yet another frequency-domain resource set provided in embodiments of the disclosure. Two downlink frequency-domain resources are taken as a whole to be partitioned into RBGs. If there is an uplink frequency-domain resource between the two downlink frequency-domain resources, RBs in an RBG may be non-consecutive. For example, in FIG. 8, RBG3 obtained by partitioning the downlink frequency-domain resources includes PRB12 and PRB25 ~ PRB27. It can be seen that RBs in RBG 3 are non-consecutive.

Exemplarily, referring to FIG. 8, the frequency-domain resource set includes RBs in downlink frequency-domain resource 1, RBs in downlink frequency-domain resource 2, and RBs in uplink frequency-domain resource 1. Downlink frequency-domain resource 1 and downlink frequency-domain resource 2 are taken as a whole to be partitioned into RBGs, and RBG0 ~ RBG4 for downlink transmission obtained by partitioning are all downlink available RBGs. Uplink frequency-domain resource 1 is taken as a whole to be partitioned into RGBs, and RBG0' ~ RBG3' for uplink transmission obtained by partitioning are all uplink available RBGs.

In the above two manners, since the RBGs are obtained by partitioning in the new manner, the number of RBGs is reduced with regard to each transmission direction, and accordingly, bits for indicating RBGs are reduced. Therefore, "0" needs to be filled in the most significant bit in a frequency domain resource assignment field in DCI, so that the length of the frequency domain resource assignment field in the DCI remains unchanged.

In case 1.1.2, S503 may be specifically implemented as follows. The terminal device performs data transmission with the network device on the available RBG(s) in the *M* RBGs. Accordingly, the network device performs data transmission with the terminal device on the available RBG(s) in the *M* RBGs.

In case 1.1.2, it can be understood that, the RBG does not include RBs having different transmission directions, that is, RBs in one RBG have the same transmission direction. Therefore, the available RBG refers to an RBG in which all RBs are available. The size of data is determined according to RBs in the available RBG for data transmission.

In case 1.1.2, the method further includes the following. The network device sends configuration information (denoted as second configuration information), where the second configuration information is used for configuring $N$ RBGs, the $N$ RBGs belong to the $M$ RBGs, and $N$ is an integer and $N > 0$. Accordingly, the terminal device receives the second configuration information, and determines the available RBG(s) from the $N$ RBGs. It can be understood that, in order to send data to the terminal device or receive data sent by the terminal device, the network device also needs to determine the available RBG(s) from the $N$ RBGs. In addition, it can be understood that, if RBGs in the $N$ RBGs are all available RBGs, the terminal device does not need to determine the available RBG(s) from the $N$ RBGs, and the terminal device can directly perform data transmission on the $N$ RBGs after receiving the configuration information.

Exemplarily, the second configuration information may be the frequency domain resource assignment field in the DCI.

Taking downlink transmission in an SBFD scenario as an example, the frequency domain resource assignment field indicates, via a bitmap, which RBGs are allocated for PDSCH transmission. Each bit in the bitmap corresponds to one RBG, where the most significant bit corresponds to RBG0, and so forth. If a bit value is 1, it indicates that an RBG is allocated for PDSCH transmission; and if the bit value is 0, it indicates that the RBG is not allocated for PDSCH transmission.

Taking uplink transmission in an SBFD scenario as an example, the frequency domain resource assignment field indicates, via a bitmap, which RBGs are allocated for PUSCH transmission. Each bit in the bitmap corresponds to one RBG, where the most significant bit corresponds to RBG0, and so forth. If a bit value is 1, it indicates that an RBG is allocated for PUSCH transmission; and if the bit value is 0, it indicates that the RBG is not allocated for PUSCH transmission, or vice versa. Exemplarily, based on the example illustrated in FIG. 7, assuming that downlink transmission is to be performed, and the frequency domain resource assignment field in the DCI sent by the network device includes 6 bits, where the 6 bits correspond to RBG0, RBG1, RBG2, RBG3, RBG4, and RBG 5 respectively in an ascending order, if the value of 6 bits is 001101, it indicates that RBG2, RBG3, and RBG5 are allocated to the terminal device, that is, the $N$ RBGs are RBG2, RBG3, and RBG5, and the available RBGs in the $N$ RBGs are RBG2, RBG3, and RBG5. That is, the network device can send data to the terminal device on RBG2, RBG3, and RBG5, and the terminal device can receive data from the network device on RBG2, RBG3, and RBG5. The size of data is determined according to RBs in RBG 2, RBs in RBG 3, and RBs in RBG5.

Exemplarily, based on the example illustrated in FIG. 8, assuming that downlink transmission is to be performed, and the frequency domain resource assignment field in the DCI sent by the network device includes 4 bits, where the 4 bits correspond to RBG0', RBG1', RBG2', and RBG3' respectively in an ascending order, if the value of 4 bits is 0011, it indicates that RBG2' and RBG3' are allocated to the terminal device, that is, the N RBGs are RBG2' and RBG3', and the available RBGs in the N RBGs are RBG2' and RBG3'. That is, the terminal device can send data to the network device on RBG2' and RBG3', and the network device can receive data from the terminal device on RBG2' and RBG3'. The size of the data is determined according to RBs in RBG2' and RBs in RBG3'.

By adopting the manner illustrated in case 1.1.2, resources can be fully scheduled, and there is no RB that cannot be scheduled, which improves resource utilization.

Case 1.2: the RB set is an RB bundle.

In case 1.2, RB bundles may be obtained by partitioning in an existing manner, or may be obtained by partitioning in a new partitioning manner, which will be elaborated below with reference to case 1.2.1 (RB bundles are obtained by partitioning in the existing manner) and case 1.2.2 (RB bundles are obtained by partitioning in the new partitioning manner).

Case 1.2.1: RB bundles are obtained by partitioning in the existing manner.

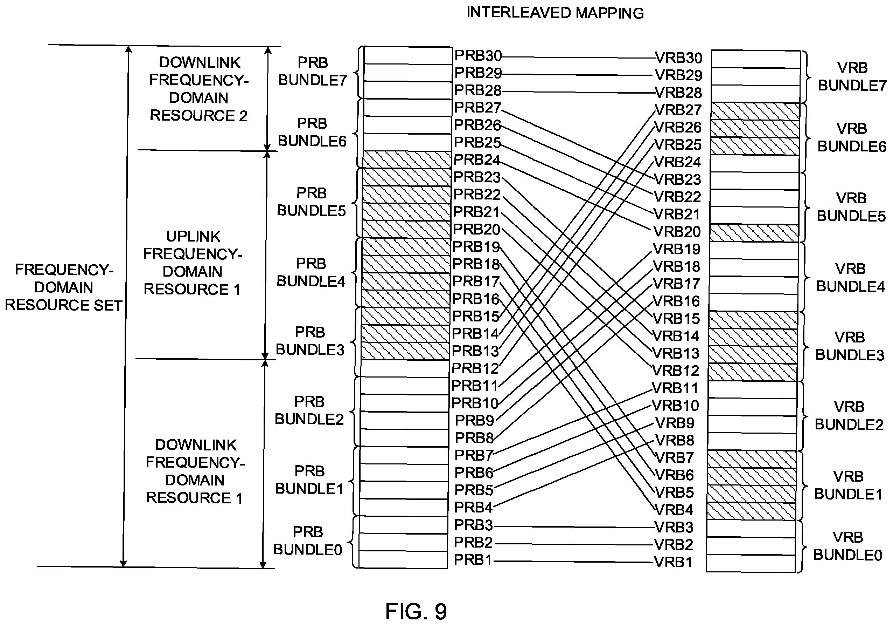

In case 1.2.1, it can be understood that, since the frequency-domain resource set includes both an uplink frequency-domain resource(s) and a downlink frequency-domain resource(s), some RB bundle may include RBs having different transmission directions. Exemplarily, referring to FIG. 9, FIG. 9 is a schematic diagram illustrating another frequency-domain resource set according to embodiments of the disclosure. The frequency-domain resource set includes downlink frequency-domain resource 1, downlink frequency-domain resource 2, and uplink frequency-domain resource 1. The frequency-domain resource set is partitioned into 8 PRB bundles: PRB bundle 0 ~ PRB bundle 7. RBs in each of PRB bundle 0 ~ PRB bundle 2 and PRB bundle 7 are all RBs for downlink transmission, RBs in each of PRB bundle 4 and PRB bundle 5 are all RBs for uplink transmission, and PRB bundle 3 and PRB bundle 6 each include both an RB(s) for uplink transmission and an RB(s) for downlink transmission. Since there is a mapping between PRBs and VRBs, a VRB corresponding to a PRB for downlink transmission can also be considered as available for downlink transmission, and a VRB corresponding to a PRB for uplink transmission can also be considered as available for uplink transmission.

In case 1.2.1, S503 may be specifically implemented as follows. The terminal device and the network device perform data transmission on an available RB bundle(s) in $M$ RB bundles. For example, the terminal device sends data to the network device on the available RB bundle(s) in the $M$ RB bundles, and the network device receives data from the terminal device on the available RB bundle(s) in the $M$ RB bundles. Alternatively, the network device sends data to the terminal device on the available RB bundle(s) in the $M$ RB bundles, and the terminal device receives data from the network device on the available RB bundle(s) in the $M$ RB bundles.

In one case, the available RB bundle refers to an RB bundle in which all RBs are available. In another case, the available RB bundle refers to an RB bundle in which all RBs include an available RB. The available RB bundle(s) for data transmission may be some or all of the available RB bundles. The available RBs in the disclosure refers to RBs having the same transmission direction, while the remaining RBs are all unavailable RBs. For example, if uplink transmission is to be performed, an RB available for uplink transmission is an available RB, while an RB available for downlink transmission is an unavailable RB. Since there is a mapping between PRBs and VRBs, a VRB corresponding to an available PRB may also be considered as available, and a VRB corresponding to an unavailable PRB may also be considered as unavailable.

Exemplarily, referring to FIG. 9, if uplink transmission is to be performed, PRB13 ~ PRB24 available for uplink transmission are available RBs, while PRB1 ~ PRB12 and PRB25 ~ PRB30 available for downlink transmission are unavailable RBs. If downlink transmission is to be performed, PRB1 ~ PRB12 and PRB25 ~ PRB30 available for downlink transmission are available RBs, while PRB13 ~ PRB24 available for uplink transmission are unavailable RBs. Here, a VRB with an index of $n$ is mapped to a PRB with an index of f($n$).

By adopting the manner illustrated in the case 1.2.1, in an SBFD scenario, RB bundles can be obtained by partitioning in the existing manner, which is simple in implementation and causes only slight change to a protocol.

Case 1.2.2: RB bundles are obtained by partitioning in the new partitioning manner.

The new partitioning manner may be the following manner 3 or manner 4.

Manner 3: the RB bundles are obtained by partitioning at a granularity of frequency-domain resource. That is, in the frequency-domain resource set, the RB bundles are obtained by partitioning according to a frequency-domain resource. That is, for each frequency-domain resource, the 1st RB bundle, the last RB bundle, and the number of RB bundles therebetween (that is, between the 1st RB bundle and the last RB bundle) in the frequency-domain resource are determined according to the formula in the foregoing "1.1.2.1 RB bundle interleaving". Specifically, for a downlink frequency-domain resource in the frequency-domain resource set, the 1st RB bundle, the last RB bundle, and the number of RB bundles therebetween in the downlink frequency-domain resource are determined. For an uplink frequency-domain resource in the uplink frequency-domain resource set, the 1st RB bundle, the last RB bundle, and the number of RB bundles therebetween in the uplink frequency-domain resource are determined.

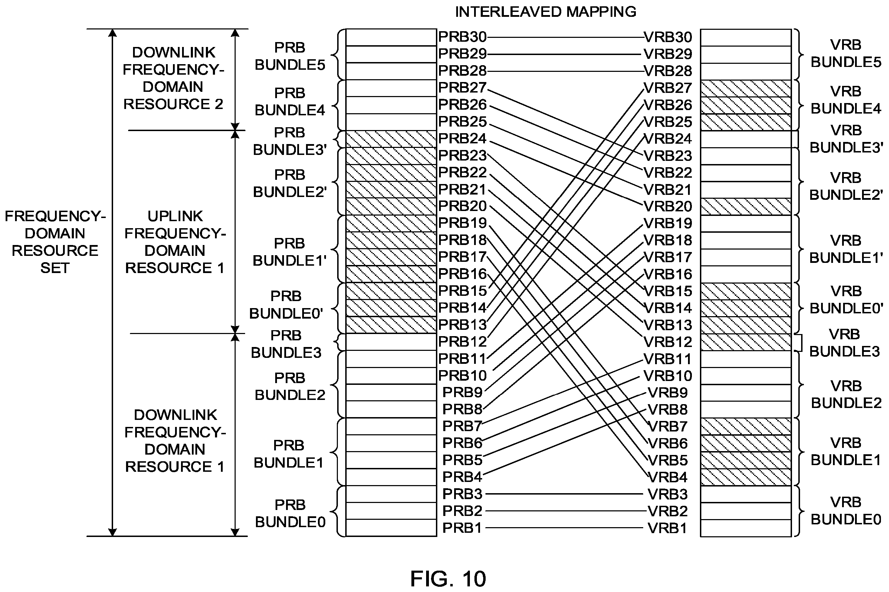

Exemplarily, FIG. 10 is a schematic diagram illustrating another frequency-domain resource set according to embodiments of the disclosure. The frequency-domain resource set includes RBs in downlink frequency-domain resource 1, RBs in downlink frequency-domain resource 2, and RBs in uplink frequency-domain resource 1. RB bundles are obtained by partitioning each of downlink frequency-domain resource 1, downlink frequency-domain resource 2, and uplink frequency-domain resource 1. RB bundles in downlink frequency-domain resource 1 may be numbered jointly with or separately from RB bundles in downlink frequency-domain resource 2. RB bundles in downlink frequency-domain resource 1 and RB bundles in downlink frequency-domain resource 2 are numbered separately from RB bundles in uplink frequency-domain resource 1. Exemplarily, downlink frequency-domain resource 1 includes an RB bundle 0 ~ RB bundle 3, uplink frequency-domain resource 1 includes RB bundle 0' ~ RB bundle 3', and downlink frequency-domain resource 2 includes RB bundle 4 ~ RB bundle 5.

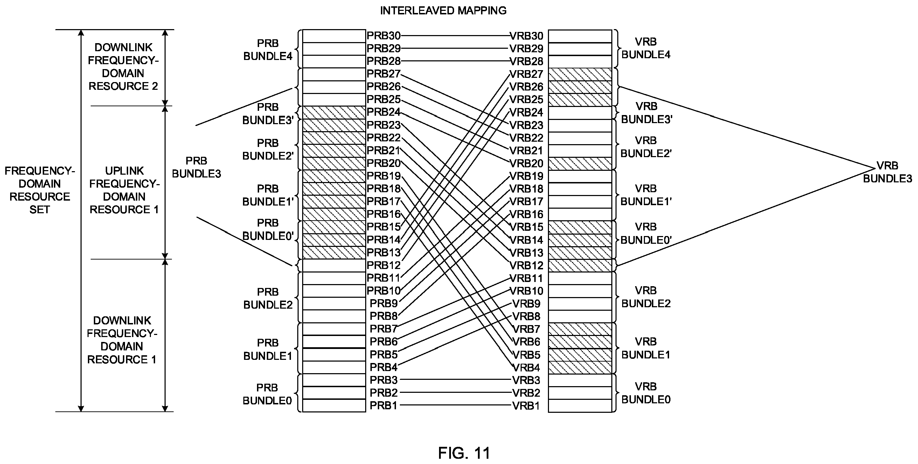

Manner 4: the RB bundles are obtained by partitioning at a granularity of a whole formed by some or all of frequency-domain resources having the same transmission direction. That is, in the frequency-domain resource set, the RB bundles are obtained by partitioning according to the transmission direction. For example, for all frequency-domain resources having the same transmission direction, the 1st RB bundle, the last RB bundle, and the number of the RB bundles therebetween (that is, between the 1st RB bundle and the last RB bundle) are determined according to the formula in the foregoing "1.1.2.1 RB bundle interleaving". Specifically, for all downlink frequency-domain resources in the frequency-domain resource set, the 1st RB bundle, the last RB bundle, and the number of RB bundles therebetween are determined. For all uplink frequency-domain resources in the frequency-domain resource set, the 1st RB bundle, the last RB bundle, and the number of RB bundles therebetween are determined. FIG. 11 is a schematic diagram illustrating yet another frequency-domain resource set provided in embodiments of the disclosure. Two downlink frequency-domain resources are taken as a whole to be partitioned into RB bundles. If there is an uplink frequency-domain resource between the two downlink frequency-domain resources, RBs in an RB bundle may be non-consecutive. For example, in FIG. 11, RB bundle 3 obtained by partitioning the downlink frequency-domain resources includes PRB12 and PRB25 ~ PRB27. It can be seen that RBs in RB bundle 3 are non-consecutive.

For example, referring to FIG. 11, the frequency-domain resource set includes RBs in downlink frequency-domain resource 1, RBs in downlink frequency-domain resource 2, and RBs in uplink frequency-domain resource 1. Downlink frequency-domain resource 1 and downlink frequency-domain resource 2 are taken as a whole to be partitioned into RB bundles, and RB bundle 0 ~ RB bundle 4 for downlink transmission obtained by partitioning are all downlink available RB bundles. Uplink frequency-domain resource 1 is taken as a whole to be partitioned into RB bundles, and RB bundle 0' ~ RB bundle 3' for uplink transmission obtained by partitioning are all uplink available RB bundles.

In case 1.2.2, S503 may be specifically implemented as follows. The terminal device and the network device perform data transmission on the available RB bundle(s) in the M RB bundles.

In case 1.2.2, it can be understood that for a PRB, an RB bundle does not include RBs having different transmission directions, that is, RBs in one RB bundle have the same transmission direction. Therefore, for a PRB, the available RB bundle refers to an RB bundle in which all RBs are available. For a VRB, the RB bundle may include RBs having different transmission directions. Therefore, for a VRB, the available RB bundle refers to an RB bundle in which all RBs are available, or an RB bundle in which all RBs include an available RB. It may be noted that, unless specified otherwise, an available RB bundle may be an available PRB bundle, or may be an available VRB bundle.

By adopting the manner illustrated in case 1.2.2, resources can be fully scheduled, and there is no RB that cannot be scheduled, which improves resource utilization.

In case 1.2, the method further includes the following. The network device sends configuration information (denoted as third configuration information), where the third configuration information is used for configuring multiple consecutive VRBs. Accordingly, the terminal device receives the third configuration information. The multiple consecutive VRBs include some or all of available VRBs in an available VRB bundle in $M$ VRB bundles. In this case, the terminal device and the network device can perform data transmission on the available RB bundle(s) in the $M$ RB bundles specifically as follows. The terminal device and the network device perform data transmission on a PRB to which an available VRB in the multiple consecutive VRBs is mapped. Specifically, the third configuration information may be an RIV.

In case 1.2, after determining the VRB bundle, the network device and the terminal device create a mapping between VRB bundles and PRB bundles. Then, the network device sends the third configuration information to the terminal device. The terminal device determines an available VRB(s) according to the third configuration information, and performs data transmission on a PRB(s) to which the available VRB(s) is mapped.

In case 1.2, exemplarily, based on the example illustrated in FIG. 9, FIG. 10, or FIG. 11, assuming that downlink transmission is to be performed, a starting RB indicated by an RIV sent by the network device is RB16, and the number of consecutive RBs indicated by the RIV sent by the network device is 4, then the terminal device sends data on PRB8 ~ PRB11 to which VRB16 ~ VRB19 are mapped, and the network device can receive data on PRB8 ~ PRB11 to which VRB16 ~ VRB19 are mapped. The size of data can be determined according to PRB8 ~ PRB11. Assuming that uplink transmission is to be performed, the starting RB indicated by the RIV sent by the network device is RB12, and the number of consecutive RBs indicated by the RIV sent by the network device is 4, then the terminal device can send data on PRB20 ~ PRB23 to which VRB12 ~ VRB15 are mapped, and the network device can receive data on PRB20 ~ PRB23 to which VRB12 ~ VRB15 are mapped. The size of data can be determined according to PRB20 ~ PRB23.

In case 1.2, exemplarily, based on the example illustrated in FIG. 9, FIG. 10, or FIG. 11, assuming that downlink transmission is to be performed, a starting RB indicated by an RIV sent by the network device is RB16, and the number of consecutive RBs indicated by the RIV sent by the network device is 12, then the terminal device sends data on PRB8 ~ PRB11, PRB12, and PRB25 ~ PRB27 to which VRB16 ~ VRB19 and VRB21 ~ VRB24 are mapped, and the network device can receive data on PRB8 ~ PRB11, PRB12, and PRB25 ~ PRB27. The size of data can be determined according to PRB8 ~ PRB11, PRB12, and PRB25 ~ PRB27. Assuming that uplink transmission is to be performed, the starting RB indicated by the RIV sent by the network device is RB20, and the number of consecutive RBs indicated by the RIV sent by the network device is 8, then the terminal device can send data on PRB13 ~ PRB15 and PRB24 to which VRB25 ~ VRB27 and VRB20 are mapped, and the network device can receive data on PRB13 ~ PRB15 and PRB24. The size of data can be determined according to PRB13 ~ PRB15 and PRB24.

Case 1.3: the RB set is a PRG.

In case 1.3, PRGs are obtained by partitioning based on the frequency-domain resource set, and the same precoding can be applied for RBs belonging to the same PRG.

In case 1.3, PRGs may be obtained by partitioning in an existing manner, or may be obtained by partitioning in a new partitioning manner, which will be described below with reference to case 1.3.1 (PRGs are obtained by partitioning in the existing manner) and case 1.3.2 (PRGs are obtained by partitioning in the new partitioning manner).

Case 1.3.1: PRGs are obtained by partitioning in the existing manner.

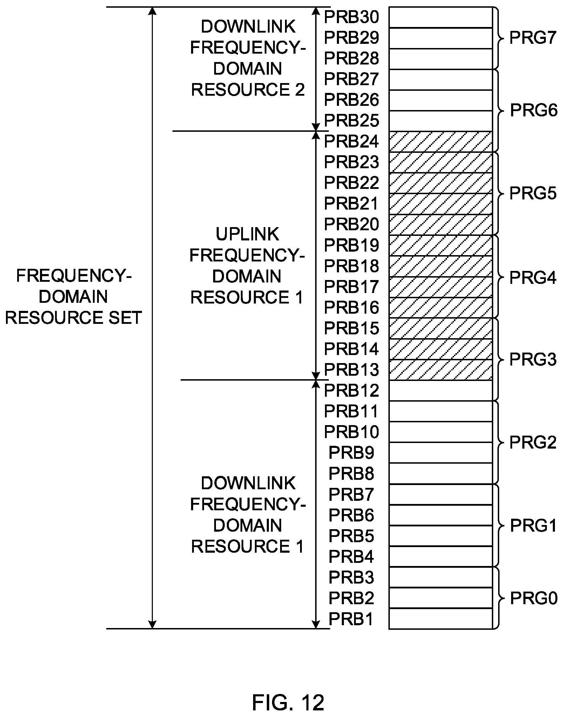

In case 1.3.1, it can be understood that, since the frequency-domain resource set includes both an uplink frequency-domain resource(s) and a downlink frequency-domain resource(s), some PRG may include RBs having different transmission directions. Exemplarily, referring to FIG. 12, FIG. 12 is a schematic diagram illustrating another frequency-domain resource set according to embodiments of the disclosure. The frequency-domain resource set includes downlink frequency-domain resource 1, downlink frequency-domain resource 2, and uplink frequency-domain resource 1. The frequency-domain resource set is partitioned into eight PRGs: PRG0 ~ PRG7. RBs in each of PRG0 ~ PRG2 and PRG7 are all RBs for downlink transmission, RBs in each of PRG4 and PRG5 are all RBs for uplink transmission, and PRG3 and PRG6 each include both an RB(s) for uplink transmission and an RB(s) for downlink transmission.

In case 1.3.1,

By adopting the manner illustrated in case 1.3.1, in an SBFD scenario, PRGs are obtained by partitioning in the existing manner, which is simple in implementation and causes only slight change to a protocol.

Case 1.3.2: PRGs are obtained by partitioning in the new partitioning manner.

The new partitioning manner may be the following manner 5 or manner 6.

Manner 5: the PRGs are obtained by partitioning at a granularity of frequency-domain resource. That is, in the frequency-domain resource set, the PRGs are obtained by partitioning according to a frequency-domain resource. In other words, for each frequency-domain resource, the 1st PRG, the last PRG, and the number of PRGs therebetween (that is, between the 1st PRG and the last PRG) in the frequency-domain resource are determined according to the formula in the foregoing "1.1.3 PRG". Specifically, for a downlink frequency-domain resource in the frequency-domain resource set, the 1st PRG, the last PRG, and the number of PRGs therebetween in the downlink frequency-domain resource are determined. For an uplink frequency-domain resource in the uplink frequency-domain resource set, the 1st PRG, the last PRG, and the number of PRGs therebetween in the uplink frequency-domain resource are determined.

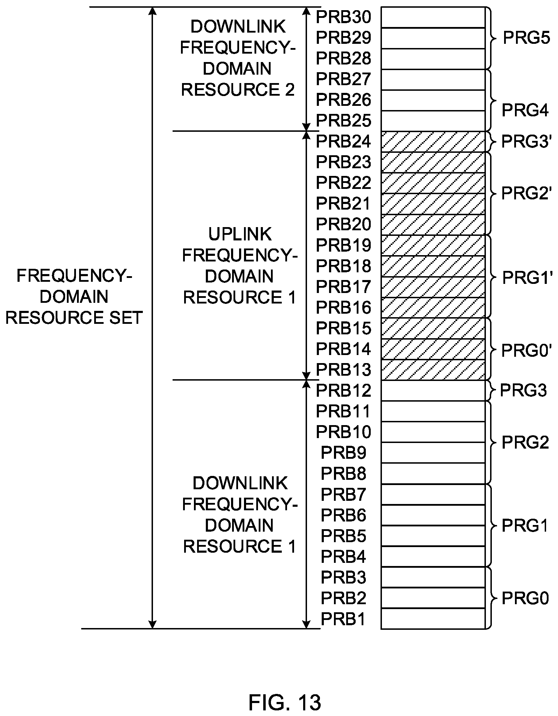

Exemplarily, FIG. 13 is a schematic diagram illustrating another frequency-domain resource set according to embodiments of the disclosure. The frequency-domain resource set includes RBs in downlink frequency-domain resource 1, RBs in downlink frequency-domain resource 2, and RBs in uplink frequency-domain resource 1. PRGs are obtained by partitioning each of downlink frequency-domain resource 1, downlink frequency-domain resource 2, and uplink frequency-domain resource 1. PRGs in downlink frequency-domain resource 1 may be numbered jointly with or separately from PRGs in downlink frequency-domain resource 2. PRGs in downlink frequency-domain resource 1 and PRGs in downlink frequency-domain resource 2 are numbered separately from PRGs in uplink frequency-domain resource 1. Exemplarily, referring to FIG. 13, downlink frequency-domain resource 1 (for example, downlink sub-band 1) includes PRG0 ~ PRG3, uplink frequency-domain resource 1 (for example, uplink sub-band 1) includes PRG0' ~ PRG3', and downlink frequency-domain resource 2 includes PRG4 ~ PRG5.

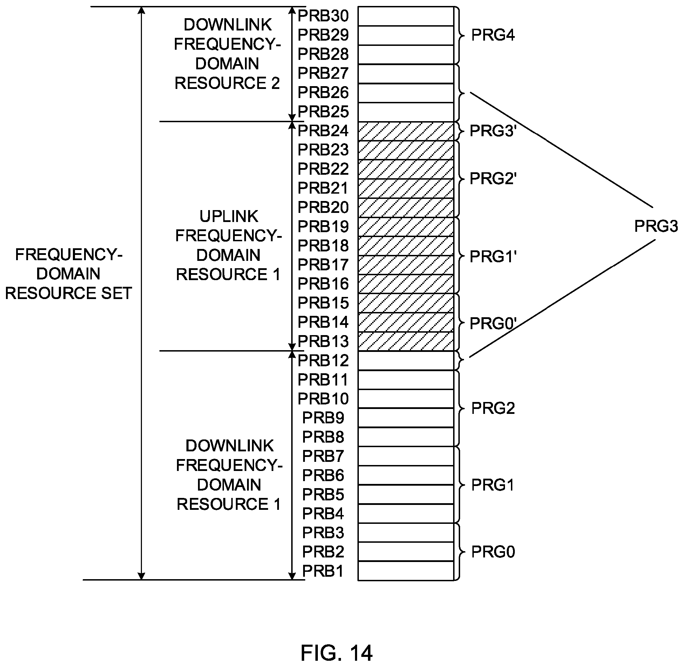

Manner 6: the PRGs are obtained by partitioning at a granularity of a whole formed by some or all of frequency-domain resources having the same transmission direction. For example, in the frequency-domain resource set, the PRGs are obtained by partitioning according to the transmission direction. That is, for all frequency-domain resources having the same transmission direction, the 1st PRG, the last PRG, and the number of PRGs therebetween (that is, between the 1st PRG the the last PRG) are determined according to the formula in the foregoing "1.1.3 PRG". Specifically, for all downlink frequency-domain resources in the frequency-domain resource set, the 1st PRG, the last PRG, and the number of PRGs therebetween in these downlink frequency-domain resources in the frequency-domain resource set are determined. For all uplink frequency-domain resources in the frequency-domain resource set, the 1st PRG, the last PRG, and the number of PRGs therebetween in these uplink frequency-domain resources in the frequency-domain resource set are determined. FIG. 14 is a schematic diagram illustrating yet another frequency-domain resource set provided in embodiments of the disclosure. Two downlink frequency-domain resources are taken as a whole to be partitioned into PRGs. If there is an uplink frequency-domain resource between the two downlink frequency-domain resources, RBs in a PRG may be non-consecutive. For example, in FIG. 14, the frequency-domain resource set includes RBs in downlink frequency-domain resource 1, RBs in downlink frequency-domain resource 2, and RBs in uplink frequency-domain resource 1. Downlink frequency-domain resource 1 and downlink frequency-domain resource 2 taken as a whole to be partitioned into PRGs, so as to obtain PRG0 ~ PRG5. Uplink frequency-domain resource 1 is taken as a whole to be partitioned into PRGs, so as to obtain PRG0' ~ PRG3'. PRG3 obtained by partitioning the downlink frequency-domain resources includes PRB12, and PRB25 ~ PRB27. It can be seen that RBs in PRG3 are non-consecutive.

By adopting the manner illustrated in case 1.3, the procedure of determining a precoding granularity by the terminal device can be simplified, for example, there is no PRG in which RBs have different transmission directions.

In case 1.3, for downlink transmission, after PRGs are obtained by partitioning, the network device applies the same precoding to all consecutive PRBs in one PRG. The terminal device obtains the PRGs by partitioning in the same manner, receives a transmission resource configured by the network device (for example, the foregoing N RBGs, or consecutive VRBs indicated by the RIV), and determines a PRB(s) used for data transmission. The network device can determine which PRBs in the PRBs used for data transmission belong to the same PRG, and applies the same precoding to the PRBs belonging to the same PRG when performing data transmission. The terminal device can determine which PRBs belong to the same PRG, and demodulate uniformly the PRBs belonging to the same PRG.

In case 1.3, for uplink transmission, after PRGs are obtained by partitioning, the network device applies the same precoding to all consecutive PRBs in one PRG. The terminal device obtains the PRGs by partitioning in the same manner. After receiving a transmission resource configured by the network device (for example, the foregoing N RBGs, or consecutive VRBs indicated by the RIV) and determining a PRB(s) used for data transmission, the terminal device can determine which PRBs belong to the same PRG, and applies the same precoding to the PRBs belonging to the same PRG. Accordingly, the network device can determine which PRBs in the PRBs used for data transmission belong to the same PRG, and demodulate uniformly the PRBs belonging to the same PRG.

Case 2: the M resources are M RBs (or M VRBs).

In case 2, the method further includes the following. Indication information is received, where the indication information indicates a starting RB and the number of RBs in the M RBs, and the starting RB and the number of RBs are determined by taking some or all of frequency-domain resources (the frequency-domain resource may be a frequency-domain resource consisting of VRBs) having the same transmission direction as a whole. In this case, S503 may be specifically implemented as follows. The terminal device and the network device perform data transmission on the M RBs.

The indication information may be an RIV. The terminal device calculates the starting RB and the number of RBs for data according to the RIV.

In an existing method, if there are multiple sub-bands having the same direction, a resource for PDSCH or PUSCH across multiple sub-bands cannot be supported. During implementation of the existing method, in the frequency-domain resource set, an RB(s) having a different direction from the transmission direction can be firstly excluded, and the RIV is calculated based on the remaining RBs. That is, the value of $N_{BWP}^{size}$ in the foregoing "1.1.2 resource allocation Type 1" is not the number of RBs in a BWP, but refers to the number of RBs in frequency-domain resources having the same transmission direction. After the RIV is obtained through the above method, since the number of RBs for calculating the RIV may be reduced, "0" may be filled in the most significant bit in a frequency domain resource assignment field in DCI, so that the length of the frequency domain resource assignment field in the DCI remains unchanged.

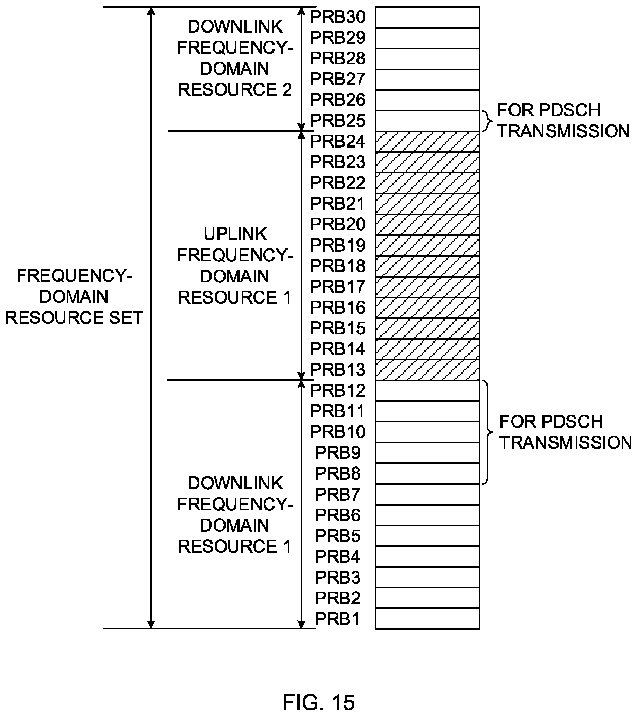

For example, referring to FIG. 15, FIG. 15 is a schematic diagram illustrating another frequency-domain resource set according to embodiments of the disclosure. Assuming that downlink transmission is to be performed and a mapping pattern between VRBs and PRBs is non-interleaved mapping, and assuming that the starting RB determined according to the RIV is RB8 and the number of RBs determined according to the RIV is 6, then PRBs for PDSCH transmission may be PRB8 ~ PRB12 and PRB25 illustrated in FIG. 15. That is, when calculating the RIV, the network device firstly excludes PRB13 ~ PRB24 having a different direction from the downlink transmission direction, and then calculates the RIV based on the remaining RBs. Assuming that uplink transmission is to be performed and a mapping pattern between VRBs and PRBs is non-interleaved mapping, the starting RB determined according to the RIV is RB15, and the number of RBs determined according to the RIV is 6, then PRBs for PUSCH transmission may be PRB15 ~ PRB20 illustrated in FIG. 15.

In case 2, RBs indicated by the RIV may all be available RBs, and data transmission can be performed on these RBs, thereby realizing data transmission in SBFD.

In the schematic diagram illustrating the frequency-domain resource set in each of FIG. 6 ~ FIG. 15, the number of RBs in each RB set is only an example, and may also be other values. For example, in FIG. 6, RB bundle 0 includes 3 RBs, and RB bundle 0 may include any positive integer number of RBs in practice. For another example, in FIG. 9, RB bundle 0 includes 3 VRBs, and RB bundle 0 may include any positive integer number of VRBs in practice. For another example, in FIG. 12, PRG0 includes 3 RBs, and PRG0 may include any positive integer number of RBs in practice.

In addition, the mapping between VRB bundles and PRB bundles in each of FIG. 9 ~ FIG. 11 is also an example only, and may also be other mapping relationships.

The foregoing case 1.1 may be applied to a resource allocation Type 0 scenario in an SBFD scenario.

The foregoing case 1.2 and case 1.4 may be applied to a resource allocation Type 1 scenario in an SBFD scenario, and exemplarily, may be specifically applied to an interleaved mapping scenario and a non-interleaved mapping scenario in the resource allocation Type 1 scenario.

The foregoing case 1.3 may be applied to a PRG partitioning scenario in an SBFD scenario.

The RB in embodiments of the disclosure may also be replaced by "sub-carrier".

According to the data transmission method provided in embodiments of the disclosure, a resource(s) for uplink or downlink data transmission in an SBFD scenario is determined, and data transmission is performed on the resource(s), thereby realizing data transmission in an SBFD scenario.

It may be noted that, although the disclosure is mainly intended for solving the problem of data transmission in an SBFD scenario, the disclosure may also be applied to a scenario that has similar requirements in a non-SBFD scenario, which is not limited in the disclosure.

It can be understood that, in the foregoing embodiments, the method and/or steps implemented by the terminal device may also be implemented by a component (for example, a chip or a circuit) that may be applied to the terminal device. The method and/or steps implemented by the network device may also be implemented by a component (e. g., a chip or a circuit) that may be applied to the network device.

The solutions provided in embodiments of the disclosure are introduced mainly from the perspective of interaction between network elements. Accordingly, embodiments of the disclosure further provide a data transmission apparatus. The data transmission apparatus is configured to implement various methods described above. The data transmission apparatus may be the terminal device in the foregoing method embodiments, or may be a component that can be applied to the terminal device. Alternatively, the data transmission apparatus may be the network device in the foregoing method embodiments, or a component that can be applied to the network device. It can be understood that, in order to implement the above functions, the data transmission apparatus includes hardware structures and/or software modules for performing respective functions. Those of ordinary skill in the art will appreciate that units and algorithmic operations of various examples described in connection with embodiments of the disclosure can be implemented by hardware or by a combination of hardware and computer software in the disclosure. Whether these functions are performed by means of hardware or hardware driven by computer software depends on the particular application and the design constraints of the associated technical solution. Those skilled in the art may use different methods with regard to each particular application to implement the described functionality, but such methods should not be regarded as lying beyond the scope of the disclosure.

In embodiments of the disclosure, division of functional units of the data transmission apparatus may be implemented according to the above method embodiments. For example, various functional units may be divided to be in one-to-one correspondence with each function, or two or more functions may be integrated into one processing unit. The integrated unit may be implemented in the form of hardware, or may be implemented in the form of software program module. It is to be noted that, division of units in embodiments of the disclosure is illustrative and is only a division of logical functions, and other manners of division may be available in practice.

Based on the same concept of the foregoing data transmission method, the disclosure further provides the following data transmission apparatus.

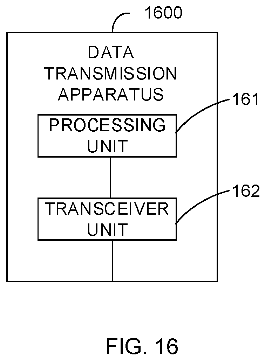

FIG. 16 is a schematic structural diagram of a data transmission apparatus provided in embodiments of the disclosure. The data transmission apparatus 1600 includes a processing unit 161 and a transceiver unit 162.

The data transmission apparatus 1600 is configured to implement functions of the terminal device in the foregoing method embodiments. In this case, the processing unit 161 is configured to determine $M$ resources from a frequency-domain resource set, where the $M$ resources are $M$ RB sets or $M$ RBs, the frequency-domain resource set includes at least one segment of frequency-domain resources, the at least one segment of frequency-domain resources includes at least one segment of uplink frequency-domain resources and/or at least one segment of downlink frequency-domain resources, and $M$ is an integer and $M > 0$. The transceiver unit 162 is configured to perform data transmission with A network device on the $M$ resources.

Optionally, the $M$ resources are RB sets, and the transceiver unit 162 is specifically configured to perform data transmission with the network device on an available RB set in the $M$ RB sets.

In another possible implementation, the transceiver unit 162 is further configured to receive configuration information, where the configuration information is used for configuring $N$ RB sets, the $N$ RB sets belong to the $M$ RB sets, and $N$ is an integer and $N > 0$. The processing unit 161 is further configured to determine the available RB set for transmitting data from the $N$ RB sets.

Optionally, the available RB set for transmitting the data refers to an RB set in which all RBs are available.

Optionally, a size of the data is determined according to RBs in the available RB set for transmitting the data.

Optionally, the available RB set for transmitting the data refers to an RB set in which all RBs include an available RB.

Optionally, a size of the data is determined according to the available RB in the available RB set for transmitting the data.

Optionally, the $M$ resources are $M$ RB sets, and the RB sets are obtained by partitioning at a granularity of frequency-domain resource.

Optionally, the $M$ resources are $M$ RB sets, and the RB sets are obtained by partitioning at a granularity of a whole formed by some or all of frequency-domain resources having the same transmission direction.

Optionally, the $M$ resources are $M$ RB sets, and RBs in each RB set are VRBs.

Optionally, the $M$ resources are $M$ RB sets, and the RB sets are PRGs.

Optionally, the $M$ resources are $M$ RBs, and the transceiver unit 162 is further configured to receive indication information, where the indication information indicates a starting RB and the number of RBs in the $M$ RBs, and the starting RB and the number of RBs are determined by taking some or all of frequency-domain resources having the same transmission direction as a whole. The transceiver unit 162 is configured to perform data transmission with the network device on the $M$ RBs.

The data transmission apparatus 1600 is configured to implement functions of the network device in the foregoing method embodiments. In this case, the processing unit 161 is configured to determine $M$ resources from a frequency-domain resource set, where the $M$ resources are $M$ RB sets or $M$ RBs, the frequency-domain resource set includes at least one segment of frequency-domain resources, the at least one segment of frequency-domain resources includes at least one segment of uplink frequency-domain resources and/or at least one segment of downlink frequency-domain resources, and $M$ is an integer and $M > 0$. The transceiver unit 162 is configured to perform data transmission with a terminal device on the $M$ resources.

Optionally, the $M$ resources are $M$ RB sets, and the transceiver unit 162 is specifically configured to perform data transmission with the terminal device on an available RB set in the M RB sets.

Optionally, the transceiver unit 162 is further configured to send configuration information, where the configuration information is used for configuring $N$ RB sets, the $N$ RB sets belong to the $M$ RB sets, and $N$ is an integer and $N > 0$. The processing unit 161 is further configured to determine the available RB set for transmitting data from the $N$ RB sets.

Optionally, the available RB set for transmitting the data refers to an RB set in which all RBs are available.

Optionally, a size of the data is determined according to RBs in the available RB set for transmitting the data.

Optionally, the available RB set for transmitting the data refers to an RB set in which all RBs include an available RB.

Optionally, a size of the data is determined according to the available RB in the available RB set for transmitting the data.

Optionally, the *M* resources are *M* RB sets, and the RB sets are obtained by partitioning at a granularity of frequency-domain resource.

Optionally, the *M* resources are *M* RB sets, and the RB sets are obtained by partitioning at a granularity of a whole formed by some or all of frequency-domain resources having the same transmission direction.

Optionally, the *M* resources are *M* RB sets, and RBs in each RB set are VRBs.

Optionally, the *M* resources are *M* RB sets, and the RB sets are PRGs.

Optionally, the *M* resources are *M* RBs, and the transceiver unit 162 is further configured to send indication information, where the indication information indicates a starting RB and the number of RBs in the *M* RBs, and the starting RB and the number of RBs are determined by taking some or all of frequency-domain resources having the same transmission direction as a whole. The transceiver unit 162 is configured to perform data transmission with the terminal device on the *M* RBs.

For the implementation of the processing unit 161 and the transceiver unit 162, reference can be made to the elaborations of the embodiments illustrated in FIG. 5.

With aid of the data transmission apparatus provided in embodiments of the disclosure, a resource for uplink or downlink data transmission in an SBFD scenario is determined, and data transmission is performed on the resource, thereby realizing data transmission in the SBFD scenario.

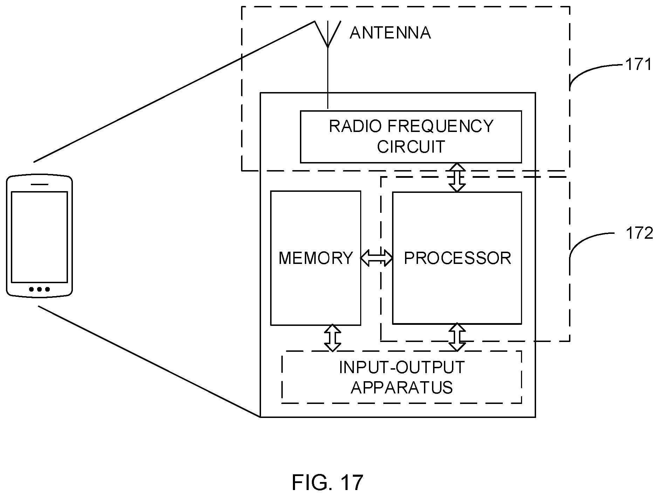

FIG. 17 is a schematic simplified structural diagram of a terminal device. For ease of understanding and convenience of illustration, in FIG. 17, a mobile phone is taken as an example of the terminal device. As illustrated in FIG. 17, the terminal device includes a processor, a memory, a radio frequency circuit, an antenna, and an input-output apparatus. The processor is mainly configured to process a communication protocol and communication data, control the terminal device, execute software programs, and process data of the software programs. The memory is mainly configured to store software programs and data. The radio frequency circuit is mainly configured to convert between a baseband signal and a radio frequency signal and process the radio frequency signal. The antenna is mainly configured to receive and send a radio frequency signal in the form of electromagnetic wave. The input and output apparatus, such as a touchscreen, a display screen, and a keyboard, is mainly configured to receive data input by a user and output data to the user. It should be noted that some types of terminal devices may not have an input/output apparatus.

When data needs to be sent, after performing baseband processing on the data to be sent, the processor outputs a baseband signal to the radio frequency circuit. After performing radio frequency processing on the baseband signal, the radio frequency circuit sends a radio frequency signal outward in the form of electromagnetic wave via the antenna. When data is sent to the terminal device, the radio frequency circuit receives a radio frequency signal via the antenna, converts the radio frequency signal into a baseband signal, and outputs the baseband signal to the processor. The processor converts the baseband signal into data and processes the data. For ease of illustration, only one memory and one processor are illustrated in FIG. 17. In practice, one or more processors and one or more memories may exist in the terminal device. The memory may also be referred to as a storage medium or a storage device, and the memory may be disposed separately from the processor, or may be integrated together with the processor, which is not limited in embodiments of the disclosure.

In embodiments of the disclosure, the antenna and the radio frequency circuit that have a transceiver function may be considered as a receiving unit and a sending unit (which may also be collectively referred to as "transceiver unit") of the terminal device, and the processor that has a processing function may be considered as a processing unit of the terminal device. As illustrated in FIG. 17, the terminal device includes the transceiver unit 171 and the processing unit 172. The transceiver unit 171 may also be referred to as a receiver/transmitter, a receiver/transmitter circuit, or the like. The processing unit 172 may also be referred to as a processor, a processing board, a processing module, a processing apparatus, or the like. The transceiver unit 171 is configured to implement functions of the transceiver unit 162 in the embodiments illustrated in FIG. 16. The processing unit 172 is configured to implement the functions of the processing unit 161 in the embodiments illustrated in FIG. 16.

For example, in an embodiment, the transceiver unit 171 is configured to implement functions performed by the terminal device in step S503 of the embodiments illustrated in FIG. 5, and the processing unit 172 is configured to implement step S501 in the embodiments illustrated in FIG. 5.

With aid of the data transmission apparatus provided in embodiments of the disclosure, a resource for uplink or downlink data transmission in an SBFD scenario is determined, and data transmission is performed on the resource, thereby realizing data transmission in the SBFD scenario.

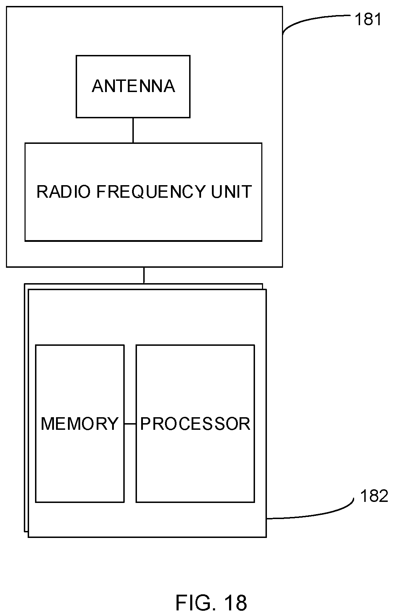

FIG. 18 is a schematic simplified structural diagram of a network device. The network device includes a radio frequency signal transmitting/receiving and converting part and a radio frequency signal transmitting/receiving and converting part and a 182 part. The radio frequency signal transmitting/receiving and converting part includes a transceiver unit 181 part. The radio frequency signal transmitting/receiving and converting part is mainly configured to send/receive a radio frequency signal and convert between the radio frequency signal and a baseband signal. The 182 part is mainly configured for baseband processing and controlling the network device. The transceiver unit 181 may also be referred to as a receiver/transmitter, a receiving/sending circuit, or the like. The part 182 is generally a control center of the network device, which may be generally referred to as a processing unit, and is configured to control the network device to implement the steps performed by the network device in FIG. 4. For details thereof, reference may be made to the illustration in the foregoing related part. The transceiver unit 181 may be configured to implement the function of the transceiver unit 162 in the embodiments illustrated in FIG. 16, and the 182 part is configured to implement the function of the processing unit 161 in the embodiments illustrated in FIG. 16.

The 182 part may include one or more boards, where each board may include one or more processors and one or more memories. The processors are configured to read and execute programs in the memory to implement a baseband processing function and control the network device. If there are multiple boards, the boards may be connected to each other to improve processing capabilities. As an optional implementation, the multiple boards may share one or more processors, or the multiple boards share one or more memories, or the multiple boards share one or more processors at the same time.

For example, in an embodiment, the transceiver unit 181 is configured to implement functions performed by the network device in step S503 of the embodiments illustrated in FIG. 5, and 182 is configured to perform step S502 of the embodiments illustrated in FIG. 5.

With aid of the data transmission apparatus provided in embodiments of the disclosure, a resource(s) for uplink or downlink data transmission in an SBFD scenario is determined, and data transmission is performed on the resource(s), thereby realizing data transmission in the SBFD scenario.

Embodiments of the disclosure further provide a computer-readable storage medium. The computer-readable storage medium is configured to stores computer programs or instructions which, when executed, are operable to perform the method in embodiments.

Embodiments of the disclosure further provide a computer program product. The computer program product includes instructions which, when executed by a computer, are operable with the computer to perform the method in the foregoing embodiments.

Embodiment of the disclosure further provide a communication system. The communication system includes the foregoing data transmission apparatus.

It should be noted that, one or more of the foregoing units may be implemented by software, hardware, or a combination of software and hardware. When any one of the foregoing units is implemented by software, the software is implemented in the form of computer program instructions and is stored in a memory, and a processor may be configured to execute the program instructions and implement the foregoing method procedures. The processor may be built in a system on chip (SoC) or an ASIC, or may be an independent semiconductor chip. In addition to a core for executing software instructions to perform operations or processing, the processor can further include a necessary hardware accelerator, such as a field programmable gate array (FPGA), a programmable logic device (PLD), or a logic circuit for implementing dedicated logic operation.

If the foregoing units are implemented by hardware, the hardware may be one or more of a CPU, a microprocessor, a digital signal processing (DSP) chip, a microcontroller unit (MCU), an artificial intelligence processor, an ASIC, an SoC, an FPGA, a PLD, a dedicated digital circuit, a hardware accelerator, or a non-integrated discrete device, which may run necessary software or be independent of software to perform the above method procedure.

Optionally, embodiments of the disclosure further provide a SoC. The SoC includes at least one processor and an interface. The at least one processor is coupled to a memory via the interface. When the at least one processor executes computer programs or instructions in the memory, the SoC is enabled to perform the method in any one of the foregoing method embodiments. Optionally, the SoC may be formed by a chip, and may also include a chip and another discrete component(s), which is not specifically limited in embodiments of the disclosure.

It should be understood that, in the elaborations of the disclosure, unless specified otherwise, the character "/" herein generally indicates that the associated objects are in an "or" relationship. For example, $A/B$ may indicate $A$ or $B$, where $A$ and $B$ each may be singular or plural. In addition, in the elaborations of the disclosure, unless specified otherwise, "multiple" means two or more than two. "At least one of" or similar phrases refer to any combination of these items, including any combination of one item or multiple items. For example, at least one of $a$, $b$, or $c$ may mean: $a$, $b$, $c$, $a$-$b$, $a$-$c$, $b$-$c$, or $a$-$b$-$c$, where $a$, $b$, and $c$ each may be singular or plural. Furthermore, in order to clearly describe the technical solutions of embodiments of the disclosure, in embodiments of the disclosure, terms such as "first" and "second" are used to distinguish the same items or similar items whose functions and effects are basically the same. Those skilled in the art should understand that the terms such as "first" and "second" do not impose limitation on the quantity and the order of execution, and the terms such as "first" and "second" do not necessarily mean the difference. Moreover, in embodiments of the disclosure, terms such as "exemplary" or "for example" are used for illustration, exemplification, or elaboration. Any embodiment or design described as "exemplary" or "for example" in the disclosure should not be construed as preferred or advantageous over other embodiments or designs. Rather, use of terms such as "exemplary" or "for example" is intended to present related concepts in a concrete manner for ease of understanding.

All or some of the above embodiments can be implemented through software, hardware, firmware, or any other combination thereof. When implemented by software, all or some the above embodiments can be implemented in the form of a computer program product. The computer program product includes one or more computer instructions. When the computer instructions are applied and executed on a computer, all or some the operations or functions of the embodiments of the disclosure are performed. The computer can be a general-purpose computer, a special-purpose computer, a computer network, or other programmable apparatuses. The computer instruction can be stored in a computer-readable storage medium, or transmitted from one computer-readable storage medium to another computer-readable storage medium. For example, the computer instruction can be transmitted from one website, computer, server, or data center to another website, computer, server, or data center in a wired manner or in a wireless manner. Examples of the wired manner can be a coaxial cable, an optical fiber, a digital subscriber line (DSL), etc. The wireless manner can be, for example, infrared, wireless, microwave, etc. The computer-readable storage medium can be any computer accessible usable-medium or a data storage device such as a server, a data center, or the like which integrates one or more usable media. The usable medium can be a magnetic medium (such as a soft disk, a hard disk, or a magnetic tape), an optical medium (such as a digital video disc (DVD)), or a semiconductor medium (such as a solid state disk (SSD)), etc.

Although the disclosure is described herein in connection with various embodiments, when carrying out the claimed disclosure, other variations to the disclosed embodiments can be understood and implemented by those skilled in the art with reference to the drawings, the disclosure, and the appended claims. In the claims, the term "comprising" does not exclude other components or steps. "A/an" does not exclude "a plurality of" or "multiple". A single processor or other units may implement several functions recited in the claims. Some measures are recited in mutually different dependent claims, but this does not mean that these measures cannot be combined to produce good results.

**Claims**

1. A data transmission method, comprising:

   determining $M$ resources from a frequency-domain resource set, wherein the $M$ resources are $M$ resource block (RB) sets or $M$ RBs, the frequency-domain resource set comprises at least one segment of frequency-domain resources, the at least one segment of frequency-domain resources comprises at least one segment of uplink frequency-domain resources and/or at least one segment of downlink frequency-domain resources, and $M$ is an integer *and $M > 0$*; and
   performing data transmission with a network device on the $M$ resources.

2. The method of claim 1, wherein the $M$ resources are $M$ RB sets, and performing data transmission with the network device on the $M$ resources comprises:
   performing data transmission with the network device on an available RB set in the $M$ RB sets.

3. The method of claim 2, further comprising:

   receiving configuration information, wherein the configuration information is used for configuring $N$ RB sets, the $N$ RB sets belong to the $M$ RB sets, and $N$ is an integer and $N > 0$; and
   determining the available RB set for transmitting data from the $N$ RB sets.

4. The method of claim 2 or 3, wherein the available RB set for transmitting the data refers to an RB set in which all RBs are available.

5. The method of claim 4, wherein a size of the data is determined according to RBs in the available RB set for transmitting the data.

6. The method of claim 2 or 3, wherein the available RB set refers to an RB set in which all RBs comprise an available RB.

7. The method of claim 6, wherein a size of the data is determined according to the available RB in the available RB set for transmitting the data.

8. The method of any one of claims 1 to 7, wherein the $M$ resources are $M$ RB sets, and the RB sets are obtained by partitioning at a granularity of frequency-domain resource.

9. The method of any one of claims 1 to 7, wherein the $M$ resources are $M$ RB sets, and the RB sets are obtained by partitioning at a granularity of a whole formed by some or all of frequency-domain resources having the same transmission direction.

10. The method of any one of claims 2 to 9, wherein the $M$ resources are $M$ RB sets, and RBs in each RB set are virtual resource blocks (VRBs).

11. The method of any one of claims 2 to 9, wherein the $M$ resources are $M$ RB sets, and the RB sets are precoding resource block groups (PRGs).

12. The method of claim 1, 10, or 11, wherein

the M resources are $M$ RBs, and the method further comprises:
receiving indication information, wherein the indication information indicates a starting RB and the number of RBs in the $M$ RBs, and the starting RB and the number of RBs are determined by taking some or all of frequency-domain resources having the same transmission direction as a whole; and
performing data transmission with the network device on the $M$ resources comprises:
performing data transmission with the network device on the $M$ RBs.

13. A data transmission method, comprising:

determining $M$ resources from a frequency-domain resource set, wherein the $M$ resources are $M$ resource block (RB) sets or $M$ RBs, the frequency-domain resource set comprises at least one segment of frequency-domain resources, the at least one segment of frequency-domain resources comprises at least one segment of uplink frequency-domain resources and/or at least one segment of downlink frequency-domain resources, and $M$ is an integer and $M > 0$; and
performing data transmission with a terminal device on the $M$ resources.

14. The method of claim 13, wherein the $M$ resources are $M$ RB sets, and the performing data transmission with the terminal device on the $M$ resources comprises:
performing data transmission with the terminal device on an available RB set in the $M$ RB sets.

15. The method of claim 14, further comprising:

sending configuration information, wherein the configuration information is used for configuring $N$ RB sets, the $N$ RB sets belong to the $M$ RB sets, and $N$ is an integer and $N > 0$; and
determining the available RB set for transmitting data from the N RB sets.

16. The method of claim 14 or 15, wherein the available RB set for transmitting the data refers to an RB set in which all RBs are available.

17. The method of claim 16, wherein a size of the data is determined according to RBs in the available RB set for transmitting the data.

18. The method of claim 14 or 15, wherein the available RB set for transmitting the data refers to an RB set in which all RBs comprise an available RB.

19. The method of claim 18, wherein a size of the data is determined according to the available RB in the available RB set for transmitting the data.

20. The method of any one of claims 13 to 19, wherein the $M$ resources are $M$ RB sets, and the RB sets are obtained by partitioning at a granularity of frequency-domain resource.

21. The method of any one of claims 13 to 19, wherein the $M$ resources are $M$ RB sets, and the RB sets are obtained by partitioning at a granularity of a whole formed by some or all of frequency-domain resources having the same transmission direction.

22. The method of any one of claims 14 to 21, wherein the $M$ resources are $M$ RB sets, and RBs in each RB set are virtual resource blocks (VRBs).

23. The method of any one of claims 14 to 21, wherein the $M$ resources are $M$ RB sets, and the RB sets are precoding resource block groups (PRGs).

24. The method of claim 13, 22, or 23, wherein

the $M$ resources are the $M$ RBs, and the method further comprises:
sending indication information, wherein the indication information indicates a starting RB and the number of RBs in the $M$ RBs, and the starting RB and the number of RBs are determined by taking some or all of frequency-domain resources having the same transmission direction as a whole; and
performing data transmission with the terminal device on the $M$ resources comprises:
performing data transmission with the terminal device on the $M$ RBs.

25. A data transmission apparatus, comprising units for performing the method of any one of claims 1 to 24.

26. A data transmission apparatus, comprising a processor and an interface circuit, wherein the interface circuit is configured to receive a signal from another apparatus except the data transmission apparatus and transmit the signal to the processor or send a signal from the processor to another apparatus except the data transmission apparatus, and the processor is configured to implement the method of any one of claims 1 to 24 via a logic circuit or executing code instructions.

27. A chip, applied to a terminal device and configured to implement the method of any one of claims 1 to 12.

28. A chip, applied to a network device and configured to implement the method of any one of claims 13 to 24.

29. A chip module, applied to a terminal device and comprising a transceiver component and a chip, wherein the chip is configured to implement the method of any one of claims 1 to 12.

30. A chip module, applied to a network device and comprising a transceiver component and a chip, wherein the chip is configured to implement the method of any one of claims 13 to 24.

31. A computer-readable storage medium, configured to store computer programs or instructions which, when executed by a computer, are operable to implement the method of any one of claims 1 to 24.

FIG. 1a

FIG. 1b

FIG. 1c

FIG. 1d

FIG. 2

FIG. 3

NETWORK DEVICE 20

PROCESSOR 201

MEMORY 202

COMPUTER PROGRAM CODE

TRANSCEIVER 203

TRANSMITTER 2031

RECEIVER 2032

2033

TERMINAL DEVICE 10

PROCESSOR 101

MEMORY 102

COMPUTER PROGRAM CODE

TRANSCEIVER 103

TRANSMITTER 1031

RECEIVER 1032

1033

FIG. 4

```
┌──────────────┐                          ┌──────────────┐
│   TERMINAL   │                          │   NETWORK    │
│    DEVICE    │                          │    DEVICE    │
└──────┬───────┘                          └──────┬───────┘
       │                                         │
┌──────┴────────────┐                  ┌─────────┴─────────┐
│ S501, DETERMINE M │                  │ S502, DETERMINE M │
│ RESOURCES FROM    │                  │ RESOURCES FROM    │
│ FREQUENCY-DOMAIN  │                  │ FREQUENCY-DOMAIN  │
│ RESOURCE SET      │                  │ RESOURCE SET      │
└──────┬────────────┘                  └─────────┬─────────┘
       │                                         │
       │   S503, DATA (TRANSMITTED ON M          │
       │          RESOURCES)                     │
       │◄────────────────────────────────────────►│
       │                                         │
```

FIG. 5

FIG. 6

FIG. 7

FIG. 8

INTERLEAVED MAPPING

FIG. 9

FIG. 10

FIG. 11

FIG. 12

FIG. 13

FIG. 14

FIG. 15

FIG. 16

ANTENNA

171

RADIO FREQUENCY
CIRCUIT

172

MEMORY

PROCESSOR

INPUT-OUTPUT
APPARATUS

FIG. 17

181

ANTENNA

RADIO FREQUENCY UNIT

MEMORY ─ PROCESSOR

182

FIG. 18

## INTERNATIONAL SEARCH REPORT

| International application No. |
| --- |
| **PCT/CN2023/112873** |

**A.    CLASSIFICATION OF SUBJECT MATTER**

H04W72/04(2023.01)i

According to International Patent Classification (IPC) or to both national classification and IPC

**B.    FIELDS SEARCHED**

Minimum documentation searched (classification system followed by classification symbols)

IPC:H04W

Documentation searched other than minimum documentation to the extent that such documents are included in the fields searched

Electronic data base consulted during the international search (name of data base and, where practicable, search terms used)

3GPP, CNTXT, ENTXTC, VEN, IEEE: 频带, 频域, 上行, 下行, 子带全双工, band, DL, downlink, frequency, PDSCH, PRB, PUSCH, RGB, SBFD, UL, uplink

**C.    DOCUMENTS CONSIDERED TO BE RELEVANT**

| Category* | Citation of document, with indication, where appropriate, of the relevant passages | Relevant to claim No. |
| --- | --- | --- |
| X | LG ELECTRONICS. "3GPP TSG RAN WG1 #109-e R1-2204529" *Study on Evaluation for NR duplex evolution,* 20 May 2022 (2022-05-20), sections 1-5 | 1-31 |
| X | SAMSUNG. "Subband non-overlapping full duplex for NR duplex evolution" *3GPP TSG-RAN WG1 Meeting #109-e R1-2203904,* 20 May 2022 (2022-05-20), sections 1-4 | 1-31 |
| X | US 2021320779 A1 (QUALCOMM INC.) 14 October 2021 (2021-10-14) claims 1-30 | 1-31 |
| X | US 2021360676 A1 (QUALCOMM INC.) 18 November 2021 (2021-11-18) description, paragraphs [0063]-[0095] | 1-31 |
| X | US 2021377938 A1 (QUALCOMM INC.) 02 December 2021 (2021-12-02) description, paragraphs [0075]-[0107] | 1-31 |

☐ Further documents are listed in the continuation of Box C.        ☑ See patent family annex.

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
| --- | --- |
| **26 October 2023** | **01 November 2023** |

| Name and mailing address of the ISA/CN | Authorized officer |
| --- | --- |
| **China National Intellectual Property Administration (ISA/ CN)** **China No. 6, Xitucheng Road, Jimenqiao, Haidian District, Beijing 100088** | |
| | Telephone No. |

Form PCT/ISA/210 (second sheet) (July 2022)

## INTERNATIONAL SEARCH REPORT
### Information on patent family members

International application No.

**PCT/CN2023/112873**

| Patent document cited in search report | | | Publication date (day/month/year) | Patent family member(s) | | | Publication date (day/month/year) |
|---|---|---|---|---|---|---|---|
| US | 2021320779 | A1 | 14 October 2021 | None | | | |
| US | 2021360676 | A1 | 18 November 2021 | TW | 202143779 | A | 16 November 2021 |
| | | | | WO | 2021230998 | A1 | 18 November 2021 |
| | | | | EP | 4151006 | A1 | 22 March 2023 |
| | | | | KR | 20230008728 | A | 16 January 2023 |
| | | | | BR | 112022022291 | A2 | 20 December 2022 |
| | | | | CN | 115428557 | A | 02 December 2022 |
| US | 2021377938 | A1 | 02 December 2021 | EP | 4158834 | A1 | 05 April 2023 |
| | | | | WO | 2021242931 | A1 | 02 December 2021 |
| | | | | TW | 202147902 | A | 16 December 2021 |
| | | | | CN | 115398850 | A | 25 November 2022 |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202210970208